# EUROPÄISCHE PATENTSCHRIFT

(11) **EP 0 777 549 B1**
(45) Veröffentlichungstag und Bekanntmachung des Hinweises auf die Patenterteilung: **29.12.1999**
(21) Anmeldenummer: 95928975.2
(22) Anmeldetag: 21.08.1995
(51) Int. Cl.: B23K 26/06

(54) **VORRICHTUNG ZUM PLATTIEREN**
PLATING DEVICE
DISPOSITIF DE PLAQUAGE

(30) Priorität: 23.08.1994 DE 4429913
(43) Veröffentlichungstag der Anmeldung: 11.06.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: KRAUSE, Volker, D-53639 Königswinter (DE); WISSENBACH, Konrad, D-52146 Würselen (DE); BEYER, Eckhard, D-52159 Roetgen-Rott (DE); VITR, Gilbert, D-52066 Aachen (DE); TREUSCH, Hans-Georg, D-52074 Aachen (DE)
(86) Internationale Anmeldenummer: DE9501126
(87) Internationale Veröffentlichungsnummer: WO9605937

(56) Entgegenhaltungen:
- EP-A- 0 282 593
- DE-A- 3 713 975
- DE-A- 4 301 689

## Beschreibung

Die Erfindung betrifft eine Vorrichtung zum Plattieren von zwei oder mehreren Metallplatten, -bändern und dergleichen durch Absorption von Laserstrahlungsenergie, die über strahlformende optische Mittel verfügt mit den Merkmalen der in den Oberbegriffen der Patentansprüche 1, 4, 10, 15 und 30 beschriebenen Gattungen.

Vorrichtungen zum Plattieren sind an sich bekannt. Bei Plattierungen werden qualitativ hochwertige Auflagewerkstoffe, die besondere chemische, physikalische oder mechanische Eigenschaften besitzen, mit kostengünstigen und festigkeitstragenden Grundwerkstoffen verbunden. Es ist dabei erforderlich, daß eine feste metallische Verbindung des Auflagewerkstoffes mit dem Grundwerkstoff erreicht wird. Dies geschieht bisher durch Zusammenpressen des Auflagewerkstoffes auf den Grundwerkstoff im plastischen Zustand. Die dazu erforderliche Energie wird nach dem Stand der Technik beispielsweise durch Walzen oder Sprengen in die Bindezone eingebracht.

Durch Plattieren werden beispielsweise Halbzeuge aus zwei oder mehreren Metallschichten hergestellt, die durch die Verfahren des Kaltwalzplattierens, Warmwalzplattierens, Sprengplattierens oder einer Kombination aus diesen Plattierverfahren miteinander verbunden werden. Diese Halbzeuge werden daher auch als Verbundwerkstoffe bezeichnet, die zu den Schichtverbundwerkstoffen gehören. Die Metallschichten des Auflagewerkstoffes und des Grundwerkstoffes sind zumeist wesentlich dicker als bei den üblichen Oberflächenveredelungsverfahren ausgeführt. In plattierten Schichtwerkstoffen sind die technischen und ökonomischen Eigenschaften ihrer Bestandteile derart kombiniert, daß sich eine gegenüber den Einzelwerkstoffen verbesserte Zweckeignung ergibt.

Beim Warmwalzplattieren bzw. Kaltwalzplattieren werden mittlere bis hohe Walzdrücke in der Größenordnung von 10² N/mm² bzw. 10⁴ N/mm² angewandt. Die erreichbaren plattierten Blechbreiten liegen unter 0,6 m. Beim Sprengplattieren wird ein Explosionsdruck von 10⁵-10⁶ N/mm² zur Anwendung gebracht. Wesentliche Nachteile des Sprengplattierens sind jedoch die wellenförmige Struktur der Bindezone zwischen dem Auflagewerkstoff und dem Grundwerkstoff und eine Blechbreite größer/gleich drei Metern.

Ein Nachteil des Kaltwalzplattierens und des Warmwalzplattierens ist die Tatsache, daß nur Metallplatten bis zu 60cm Breite verarbeitet werden können. Zudem sind beim Warmwalzplattieren und beim Kaltwalzplattieren die bereits genannten hohen Walzdrücke aufzuwenden, was einen entsprechenden technischen und energiemäßigen Aufwand zur Folge hat. Beim Warmwalzplattierverfahren werden Auflagewerkstoff und Grundwerkstoff bis zu 1.200° erhitzt, so daß eine Veränderung der metallurgischen und mechanischen Eigenschaften der Materialien stattfindet.

Aus der DE-PS 37 13 975 ist eine Vorrichtung und ein Verfahren zum Fügen mit Laserstrahlung bekannt. Die dort geoffenbarte Vorrichtung und das dazugehörige Verfahren sind zwar insbesondere zum Verschweißen von Werkstückkanten vorgesehen, jedoch sollen sich auch Plattierungen von Schichtwerkstoffen durchführen lassen. In der DE-PS 37 13 975 verfügt die Vorrichtung über eine Laserstrahlung, die besonders geeignet ist, die Oberflächen von zwei Schichtwerkstoffen zu erwärmen, die mittels eines V-förmigen Spaltes zusammengeführt werden. Diese Laserstrahlung verläuft im wesentlichen parallel zur Fügespaltebene und senkrecht zur Fügelinie. Darüber hinaus schwingt die Laserstrahlung überwiegend parallel zur Fügespaltebene. Gemäß dem Gegenstand der DE-PS 37 13 975 werden die beiden zu verbindenden Werkstoffflächen einander in zunehmendem Maße angenähert, so daß sich eine Fügestelle ergibt. Von dieser Fügestelle aus erstreckt sich eine Schweißnaht, wobei im Bereich der Schweißnaht die miteinander zu verbindenden Werkstoffflächen durch Aufschmelzen der Werkstoffe miteinander verschweißt sind. Das Zusammenbringen der Werkstoffflächen erfolgt unter Druckbeaufschlagung im Bereich vor der Fügestelle. Im Bereich der Fügestelle selbst liegen die Werkstoffflächen praktisch drucklos aneinander, so daß der aufgeschmolzene Werkstoff der beiden Werkstoffflächen praktisch nicht unter Fügedruck steht. Die geschilderte Verbindungsmethode zweier Metallschichten gemäß der DE-PS 37 13 975 ist für das Verschweißen sinnvoll, nicht jedoch für das Plattieren zweier Metallschichten möglich. Beim Plattieren werden die zu verbindenden Oberflächen der beiden Metallschichten nicht bis zum Schmelzpunkt erhitzt, sondern es wird mit der Temperatur bewußt deutlich unter der Schmelztemperatur der zu verbindenden Werkstücke geblieben, da das Plattieren nur im plastischen Zustand der zu verbindenden Werkstoffe erfolgt, nicht jedoch im aufgeschmolzenen Zustand. Darüber hinaus werden beim Plattieren die erwärmten Zonen der Oberflächen der beiden zu verbindenden Metallschichten unmittelbar mittels Walzen aufeinander gepreßt, um eine Verbindung zwischen den beiden Oberflächen herzustellen. Es ist nicht möglich, beim Plattieren die erwärmte Zone der beiden zu verbindenden Metallschichten an der Fügestelle drucklos aufeinander liegen zu lassen, wie es bei dem Gegenstand der DE-PS 37 13 975 der Fall ist.

Als Laserstrahlquelle werden bei dem Gegenstand der DE-PS 37 13 975 CO₂-Laser verwendet. Beim CO₂-Laser liegt der Leistungsbedarf für eine Plattierungsbreite von etwa 1 cm z.Z. zwischen 1 - 4 kW in Abhängigkeit von der Prozeßführung und den verwendeten Werkstoffen. Für eine Plattierungsbreite von über einem Meter werden Laserleistungen > 100 kW erforderlich, die mit den derzeit vorhandenen Lasersystemen nicht erreicht werden können. Darüber hinaus müssen Plattierungen von Metallschichten ohne lokale Anschmelzungen der Oberflächen der beiden zu verbindenden Werkstoffflächen durchgeführt werden. Dies stellt extreme Anforderungen an die Homogenität der Leistungsdichteverteilung an der Fügestelle. Bei CO₂-Lasern erfolgt die Homogenisierung durch strahlformende Optiken und/oder Schwingspiegel. Eine Homogenisierung wird z.B. durch Facettenspiegel aus technischen Gründen (Fesnelzahl) für die Wellenlänge der CO₂-Laser sehr schwierig sein. Sollen Metallplatten mit einer Breite von über einem Meter durch Plattieren zusammengefügt werden, so ist zusätzlich noch ein großer technischer und apparativer Aufwand erforderlich, der entsprechend hohe Kosten nach sich zieht, um eine Homogenisierung der Leistungsdichteverteilung an der Fügestelle der beiden Oberflächen zu erreichen.

Die US-PS 53 06 890 offenbart eine Vorrichtung zum Schweißen eines glatten Metallbleches und eines gewellten Metallbleches. Diese beiden Bleche werden zusammengeschweißt, wobei das glatte Blech als Träger für die Wellblechstruktur des anderen Bleches dient. Verwendung findet das so entstandene Schweißprodukt in Katalysatoren, die in Verbrennungsautos eingebaut werden. Die Breite des Trägers mit dem Wellblech soll nicht weniger als 160 mm betragen. Zum Schweißen wird ein YAG-Laser oder ein CO₂-Laser verwendet. Es sind den Strahl formende Mittel für den Laserstrahl vorgesehen, so daß die zu plattierenden Metallbleche auf der Fügelinie in ihrer gesamten Länge bestrahlt werden. Die beiden Metallbleche werden in der Umgebung der Fügelinie erwärmt und direkt an der Fügelinie von zwei Walzen zusammengepreßt. Die Dicke der beiden Metallbleche liegt zwischen 50 Mikrometer und 1 Millimeter. Die Ausdehnung des Laserstrahls über die gesamte Fügelinie wird über einen entsprechenden nach dem Stand der Technik ausgebildeten Spiegel erreicht. Gegenstand der US-PS 53 06 890 ist ein Schweißverfahren, auf das sich der Gegenstand der vorliegenden Anmeldung nicht richtet.

Durch den Gegenstand der DE-OS 43 01 689 ist ein Halbleiterlasersystem bekannt, das mehrere Halbleiterlasereinheiten umfaßt, von denen jede ein Kopplungselement aufweist, das die Laserstrahlung der jeweiligen Halbleiterlasereinheit in eine lichtleitende Faser einkoppelt, und ein die Fasern umfassendes Faserbündel als Lichtleitersystem, das ein Ende aufweist, aus dem eine durch die Summe der von den Halbleiterlasereinheiten erzeugten Laserstrahlung gebildete Gesamtlaserstrahlung austritt, die bei Lasertätigkeit aller Halbleiterlasereinheiten eine Zielfläche auf einem zu bestrahlenden Objekt ausleuchtet. Es ist eine Steuerung vorgesehen mit der die Leistung jeder einzelnen Halbleiterlasereinheit definiert steuerbar ist, dabei ist der Steuerung eine Bestrahlung unterschiedlicher Flächenelemente der Zielfläche mit einzeln für jedes Flächenelement definierbarer Intensität vorgebbar. Der Steuerung ist ein lokal variierendes oder zeitlich variierendes Bestrahlungsprofil für die Zielfläche vorgebbar. Mit dem Gegenstand der DE-OS 43 01 689 lassen sich Bestrahlungsaufgaben durchführen, wie beispielsweise innerhalb der Zielfläche unterschiedliche Flächenelemente mit unterschiedlicher Intensität zu bestrahlen, und somit die Art der Bestrahlung von Flächenbereichen der Zielfläche an die gewünschte Helligkeit anzupassen. Die Gesamtlaserstrahlung wird nicht durch ein Lasersystem, sondern durch mehrere Halbleiterlasersysteme erzeugt, damit wird durch definierte Steuerung der Leistung der jeweiligen Halbleiterlasereinheiten ein komplexes Bestrahlen möglich.

In einem Ausführungsbeispiel des Halbleiterlasersystems sind neben den Faserbündeln zum Beleuchten noch zusätzliche Detektorfasern vorgesehen, die in die Endfläche mit ihren Faserendflächen in regelmäßiger Art und Weise zwischen den Faserendflächen zur Beleuchtung liegen, so daß die zusätzlichen Detektorfasern eine Abbildung der Faserendflächen auf die Zielfläche in gleicher Weise wie bei den Faserendflächen zur Beleuchtung erfolgt. Die den Faserendflächen gegenüberliegenden Enden der zusätzlichen Detektorfasern enden auf einer Detektormatrix, die für jede einzelne zusätzliche Detektorfaser die empfangene Strahlung einzeln detektiert. Mit dieser Detektormatrix ist somit ein Bild der Zielfläche erfaßbar, wobei durch ein entsprechendes Bildverarbeitungsgerät ein Bild der Zielfläche auf einem Bildschirm darstellbar ist. Es ist dazu eine derartige Zahl von zusätzlichen Detektorfasern in das Faserbündel zur Beleuchtung eingearbeitet, daß eine ausreichend genaue Darstellung eines Bildes der bestrahlten Zielfläche auf dem Bildschirm möglich ist und somit eine genaue Beobachtung der bestrahlten Flächenbereiche der Zielfläche zuläßt. Maßnahmen zur Homogenisierung der Leistungsdichteverteilung der Laserstrahlung sind bei dem Gegenstand der DE-OS 43 01 689 nicht vorgesehen.

Aus der JP 2-247096 A ist es bekannt, die Intensität einer nicht näher bezeichneten Laserstrahlung zu vergleichmäßigen. Dazu wird der Laserstrahl über einen Spiegel in eine Vorrichtung geleitet, die die optische Achse verschiebt. Diese Strahlung wird über eine Linse in ein calite scope geleitet, wo sie mehrfach reflektiert wird. Diese Mehrfachreflektion führt zur Vergleichmäßigung der Leistungsdichteverteilung des Laserstrahls. Aus der JP 4-258390 A ist ein Schweißverfahren für nichtrostende Rohre bekannt. Zum Schweißen wird ein nicht näher definierter Laserstrahl verwendet. Bevor die Verschweißung der beiden Kannten des Bleches zu einem Rohr stattfindet, werden diese Enden bzw. das Gesamtrohr vorgewärmt und zwar mit einer elektrischen Anlage, die mit Hochfrequenz arbeitet. Damit wird ein gleichmäßiges Schweißergebnis erzielt.

Der Erfindung liegt deshalb die Aufgabe zugrunde, eine Vorrichtung zum Plattieren von wenigstens zwei Metallplatten, -bändern und dergleichen zu schaffen, die insbesondere Plattenbreiten der Auflagewerkstoffe und der Grundwerkstoffe, die auch größer als einen Meter sein können, plattieren kann, die ferner den höchsten Anforderungen an die Homogenität der Leistungsdichteverteilung an der Fügestelle zu genügen vermag, die eine Minimierung der Veränderungen der metallurgischen und mechanischen Eigenschaften der zu plattierenden Metallplatten ermöglicht, die beim Plattieren ein Schmelzen und ein Nichtverbinden der beiden zu verbindenden Oberflächen verhindert, die eine Verringerung der Walzdrücke auf die beiden zu verbindenden Metallplatten ermöglicht und schließlich eine Reduzierung der zum Plattieren der beiden zu verbindenden Metallplatten aufzuwendenden Energie zuläßt.

Diese Aufgaben werden erfindungsgemäß durch die in den kennzeichnenden Teilen der Patentansprüche 1, 4, 10, 15 und 30 angegebenen Merkmale gelöst. Vorteilhafte Weiterbildungen der Erfindungsgegenstände sind in den Merkmalen der Untersprüche 2, 3, 5 bis 9, 11 bis 14, 16, 29, 31 bis 33 gekennzeichnet.

Vorteile der Erfindung liegen insbesondere darin, daß durch die Verwendung einer Strahlquelle, die aus einer Anordnung von Laserdioden gebildet wird, durch den weit höheren elektrischen und optischen Wirkungsgrad der Laserdioden eine Energieeinsparung um das fünf- bis sechsfache gegenüber der Plattierung mit einem CO₂-Laser bei etwa gleichem Absorptionsgrad möglich ist. Ein weiterer sehr wesentlicher Vorteil der Erfindung besteht darin, daß zur Homogenisierung der Leistungsdichteverteilung des Laserstrahls an der Fügestelle entlang der gesamten Länge der Fügelinie erfindungsgemäß Glasplatten mit Totalreflexion für den durchtretenden Laserstrahl, bzw. keilförmig zusammenlaufende Prismen ebenfalls mit Totalreflexion im Prisma für den durchtretenden Laserstrahl, bzw. eine sehr dichte Anordnung von Laserdioden in der Längenausdehnung und in mehreren Ebenen übereinander gestapelt mit seitlich angebrachten reflektierenden Begrenzungsvorrichtungen oder spezielle Lichtleiterfaserbündel Verwendung finden. Durch die Einschaltung der Glasplatten, Prismen oder reflektierenden Begrenzungsflächen oder spezieller Lichtleiterfaserbündel zwischen der Laserstrahlquelle und der zu einem rechteckförmigen Strahlquerschnitt fokussierenden Zylinderlinse läßt sich eine sehr hohe Homogenität der Leistungsdichteverteilung über die gesamte Länge des rechteckförmigen Fokus bzw. der Fügelinie erreichen, die sich mit den herkömmlichen Plattierungsverfahren und auch mit einem hin- und herlaufenden CO₂-Laserstrahl in einer Breite von über einem Meter nicht erreichen läßt. Durch die spezielle Anordnung der Laserdioden in nebeneinander beliebig aufreihbaren Laserdiodenbarren, die auch noch in der Höhe gestapelt werden können, läßt sich mit Hilfe der Zylinderlinse eine Laserstrahlung mit rechteckförmigem Strahlquerschnitt erzielen, die in dem V-förmigen Spalt zwischen den Oberflächen der zu plattierenden Metallplatten nur örtlich begrenzte Zonen geringer räumlicher Tiefe an den beiden jeweils zu plattierenden Oberflächen der Metallplatten erwärmt. Durch die geringe räumliche Tiefe der Erwärmung an der Fügestelle ist es möglich, eine sehr geringe Veränderung der metallurgischen und mechanischen Eigenschaften der beiden zu plattierenden Metallplatten, also des Auflagewerkstoffes und des Grundwerkstoffes, zu erreichen. Darüber hinaus ermöglicht die gleichmäßige Leistungsdichteverteilung der Laserstrahlung mit rechteckförmigen Strahlquerschnitt sowie eine vorgesehene Messung der Laser- und/oder Wärmestrahlung an der Fügestelle zur Erzeugung eines Regelsignals zur Veränderung der Vorschubgeschwindigkeit der Metallplatten bzw. der Laserleistung, ein Aufschmelzen der Oberflächen der beiden zu verbindenden Metallplatten zu vermeiden und stets denjenigen plastischen Zustand der Materialien einzuhalten, der eine optimale Verbindung dieser beiden Oberflächen gestattet. Durch diese exakte Steuerung des plastischen Zustands der Oberflächen der beiden zu verbindenden Metallplatten sind auch nur geringe Walzdrücke gegenüber dem Warm- und Kaltwalzplattieren zum Zusammendrücken der beiden zu verbindenden Metallplatten erforderlich. Dadurch ergeben sich nur geringe Umformgrade, was zur Reduzierung der Verfestigung in der Bindezone zwischen den beiden zu verbindenden Metallplatten führt. Durch die spezielle Anordnung der in Laserdiodenbarren nebeneinander aufgereihten Laserdioden lassen sich ohne zusätzliche technische Maßnahmen jederzeit Breiten von über einem Meter der zu verbindenden Metallplatten erreichen. Die für einen entsprechenden Anwendungsfall erforderliche hohe Laserleistung läßt sich durch Übereinanderstapeln dieser Laserdiodenbarren aus aufgereihten Dioden jederzeit beliebig steuern.

Nachstehend wird die Erfindung anhand von Ausführungsbeispielen und von Zeichnungen näher erläutert.

Es zeigen:
- Figur 1: Eine Prinzip- und Teildarstellung einer erfindungsgemäßen Vorrichtung zum Plattieren von zwei bandförmigen Metallplatten,
- Figur 2: in Seitenansicht als Strahlquelle eine Laserdiodenanordnung mit einem keilförmig zulaufenden Prisma eines ersten erfindungsgemäßen Ausführungsbeispiels,
- Figur 3: eine Draufsicht nach Figur 2,
- Figur 4: eine Seitenansicht einer Strahlquelle gemäß Figur 2 mit einer halbzylindrischen Endfläche des Prismas,
- Figur 5: eine Draufsicht nach Figur 4,
- Figur 6: eine Prinzipdarstellung einer zweiten erfindungsgemäßen Vorrichtung zum Plattieren, wobei die Gesamtlaserdiodenanordnung mit einer rechteckigen Glasplatte für den Durchtritt der Laserstrahlung versehen ist,
- Figur 7: die Vorrichtung gemäß Figur 6 mit mehreren Glasplatten und Gesamtdiodenanordnungen,
- Figur 8: eine Prinzipdarstellung in Seitenansicht einer dritten erfindungsgemäßen Vorrichtung zum Plattieren mit Gesamtlaserdiodenanordnung,
- Figur 9: eine Draufsicht nach Figur 8,
- Figur 10: eine Vorrichtung gemäß Figur 8, wobei die Gesamtlaserdiodenanordnung mit seitlichen reflektierenden Begrenzungsvorrichtungen versehen ist,
- Figur 11: die Vorrichtung gemäß Figur 8 in Seitenansicht mit veränderbarer Intensität der Laserstrahlung im Bereich außerhalb des Fokus,
- Figur 12: eine Draufsicht nach Figur 11,
- Figur 13: eine Meßvorrichtung mit nachgeschaltetem Regelkreis für den Plattierungsvorgang,
- Figur 14: die erfindungsgemäße Vorrichtung zum Plattieren mit einer Vorwärmung der zu verbindenden Metallplatten,
- Figur 15: eine weitere Meßvorrichtung für den Plattierungsprozeß und
- Figur 16: eine Prinzipdarstellung einer vierten erfindungsgemäßen Vorrichtung zum Plattieren mit einem Lichtleiterfaserbündel.

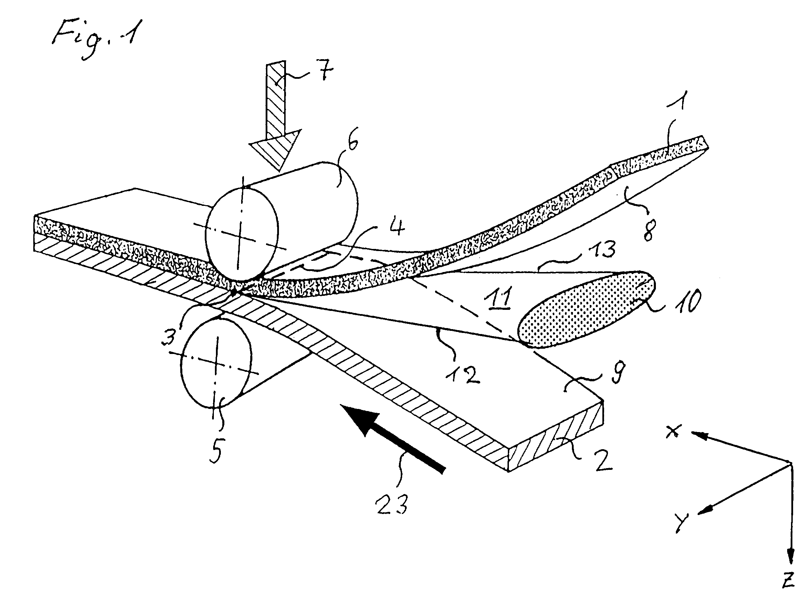

Aus Figur 1 ist eine Prinzip- und Teildarstellung der erfindungsgemäßen Vorrichtung zum Plattieren ersichtlich. In Figur 1 ist lediglich das Prinzip des Plattierens dargestellt, d.h., daß die Laserstrahlquelle, die Walzvorrichtung und alle anderen zum Plattieren erforderlichen Vorrichtungen der Übersichtlichkeit halber weggelassen wurden und nur eine Teildarstellung der wesentlichsten Elemente für die Erfindung vorgenommen wurde. Plattiert werden beispielsweise zwei Metallplatten 1 und 2. Diese Metallplatten können mehrere Millimeter bis zu einigen Zentimetern dick sein und können als großformatige Metallflächen mit über einem Meter Breite, als Metallbändern und dergleichen ausgeführt sein. Bei der Darstellung in Figur 1 werden zwei Metallplanen 1, 2 in bandförmiger Gestalt plattiert, wobei die Metallplane 1 den Auflagewerkstoff und Metallplatte 2 den Grundwerkstoff darstellt. Die Metallplatten 1 und 2 werden an einer Fügestelle 3 zusammengeführt. Eine in Richtung der y-Koordinate gelegene Fügelinie 4 kennzeichnet die Fügestelle 3 auf der gesamten Breite der zu plattierenden Oberflächen näher, wobei sich die Fügelinie 4 je nach den Anforderungen auch über mehrere Meter Breite der miteinander zu verbindenden Oberflächen 8, 9 der Metallplatten 1, 2 erstrecken kann.

Die Planierung der beiden Metallplatten 1, 2 erfolgt einmal unter der Voraussetzung einer Druckausübung durch Walzen 5 und 6, die einer in Figur 1 nicht dargestellten Walzvorrichtung angehören. Mit diesen Walzen wird auf die Metallplanen 1 und 2 mit der Walzkraft 7 in Richtung der z-Koordinate direkt an der Fügestelle 3 beziehungsweise der Fügelinie 4 gedrückt.

Die andere Voraussetzung zum Plattieren ist eine Erwärmung der Oberfläche 8 der Metallplatte 1 und der Oberfläche 9 der Metallplatte 2 als den beiden zu verbindenden Metallplatten in einem Bereich kurz vor der Fügestelle 3 beziehungsweise der Fügelinie 4. Diese Erwärmung erfolgt bei der erfindungsgemäßen Plattierungsvorrichtung durch Absorption einer Laserstrahlung 10, die durch Laserdioden erzeugt worden ist. Dazu kann unpolarisierte oder polarisierte Laserstrahlung Anwendung finden. Die später noch näher beschriebenen Strahlquellen, die eine Gesamtlaseranordnung 25 darstellen, verfügen dazu über strahlformende optische Mittel, die die Laserstrahlung 10 zu einem Strahl mit rechteckförmigem Strahlquerschnitt 22 formt. Die Laserstrahlung 10 mit rechteckförmigem Strahlquerschnitt 22 wird auf die Fügestelle 3 derart gerichtet, daß der rechteckförmige Strahlquerschnitt 22 mit der Fügelinie 4 zusammenfällt. Die Laserstrahlung 10 fällt außerdem mit der Spaltebene 11 zusammen, die durch die Begrenzungslinien 12 und 13 des Laserstrahls 10 angedeutet wird. Die Spaltebene verläuft in der Mine eines V-förmigen Spaltes, der durch die beiden Metallplatten 1 und 2 vor dem Zusammenpressen durch die Walzen 5 und 6 gebildet wird. Die Laserstrahlung 10 steht darüber hinaus senkrecht auf der Fügelinie 4. Durch die Ausrichtung des rechteckförmigen Strahlquerschnitt 22 auf die Fügelinie 4 und das senkrechte Ausrichten der Laserstrahlung 10 auf die Fügelinie 4 wird erreicht, daß die Laserstrahlung 10 bis auf den Grund des V-förmigen Spaltes gleichmäßig verteilt gelangt. Da die Ausdehnung des rechteckförmigen Strahlquerschnitts 22 in z-Richtung relativ gering ist, wird damit erreicht, daß nur je eine kleine Zone unmittelbar vor der Fügelinie 4 an den beiden Oberflächen 8 und 9 der Metallplatten 1 und 2 erwärmt wird, wobei die Temperatur der Oberflächen 8 und 9 der Metallplanen 1 und 2 derart gesteuert wird, daß ein plastischer Zustand der beiden Oberflächen erreicht wird, aber die Temperatur dabei deutlich unter der Schmelztemperatur der beiden zu verbindenden Metallplatten verbleibt. Verwendet man dagegen eine polarisierte Laserstrahlung, so schwingt die Laserstrahlung 10 an der Fügestelle 3 überwiegend parallel zur Spaltebene 11 bzw. der x-y-Ebene. Es läßt sich dann der Reflexionsgrad der Laserstrahlung durch diese Polarisierung steuern. Schwingt die Laserstrahlung 10 parallel zur Spaltebene 11 , so ist die Reflexion bei großem Einfallswinkel sehr hoch, wenn man sie mit einer senkrecht zur Spaltebene 11 schwingenden Laserstrahlung 10 vergleicht. Deshalb wird die parallel zur Spaltebene 11 schwingende Laserstrahlung 10 wegen der geringen Abhängigkeit ihrer Reflexion vom Einfallswinkel größtenteils bis zur Fügestelle 3 bzw. der Fügelinie 4 bzw. in den Bereich unmittelbar davor gelangen, so daß erst dort die Absorption im wesentlichen stattfindet. Die gute Konzentration einer parallel zur Spaltebene 11 polarisierten Laserstrahlung 10 auf die Fügestelle 3 bzw. Fügelinle 4 auf dem Grund des V-förmigen Spaltes der beiden Metallplatten 1 und 2 ermöglicht eine exakte Erwärmung der beiden jeweils zu plattierenden Oberflächen 8 und 9 in den plastischen Zustand. Meß- und Regelmethoden für die unpolarisierte und polarisierte Laserstrahlung werden dazu später noch beschrieben.

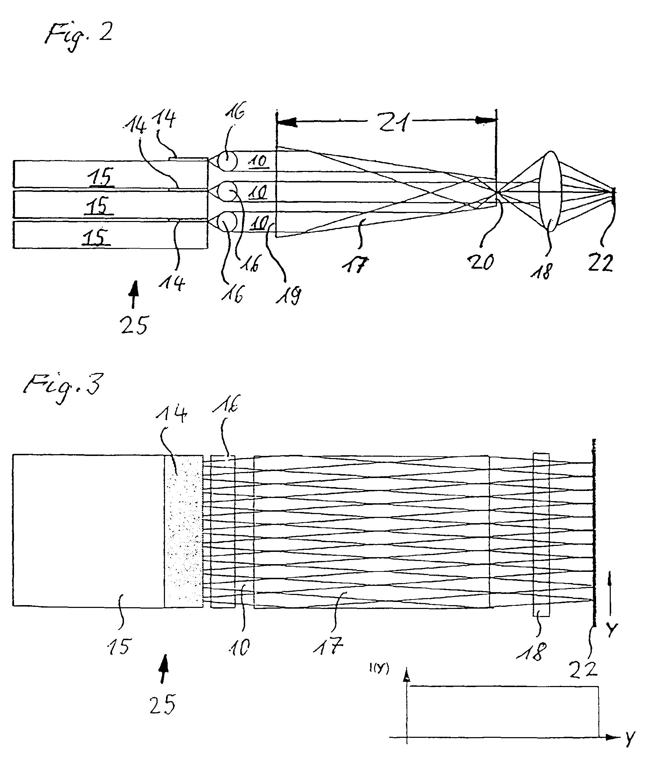

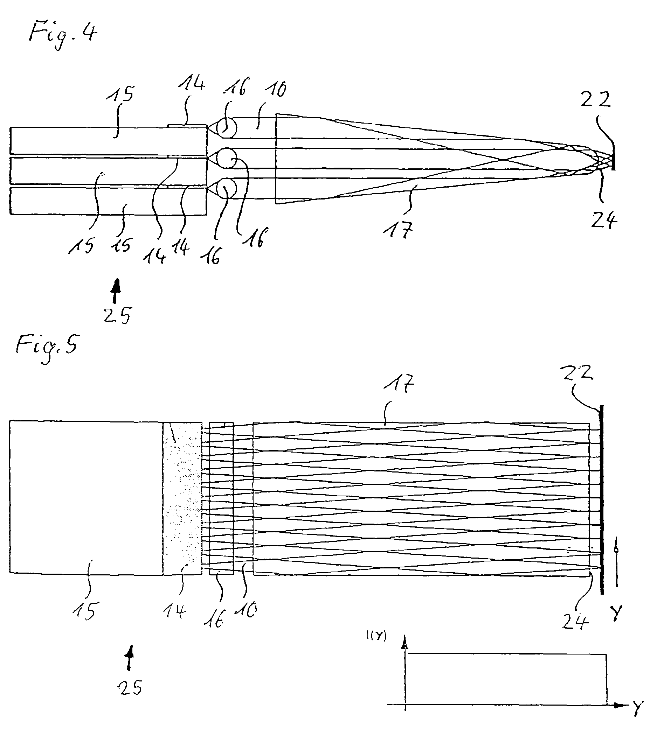

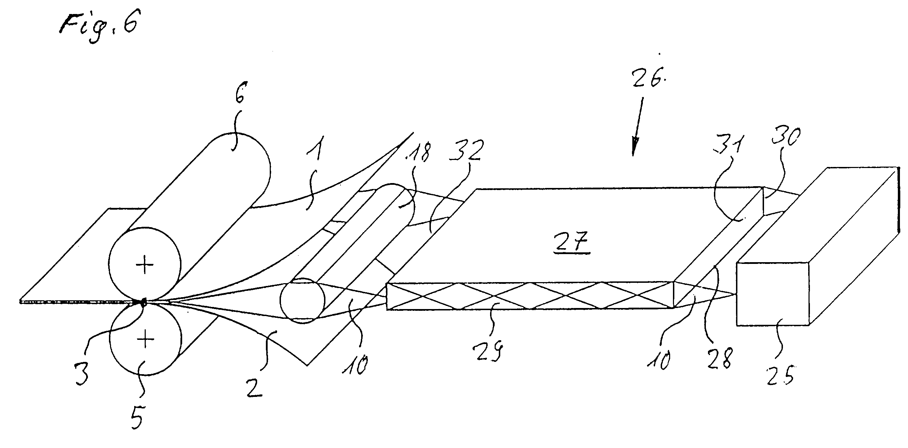

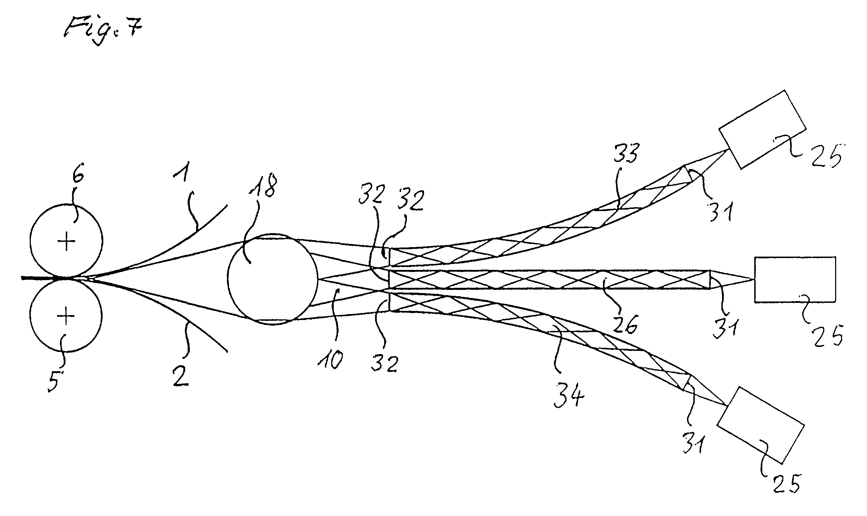

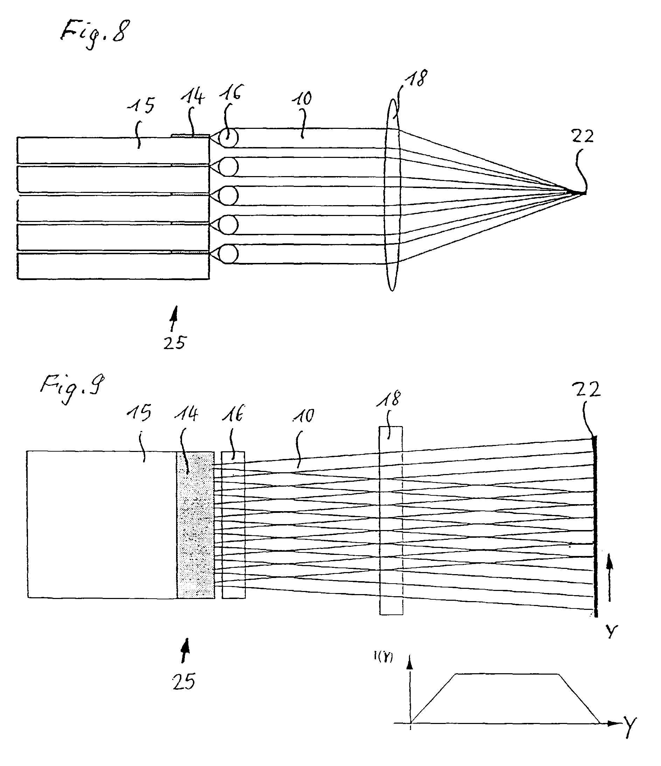

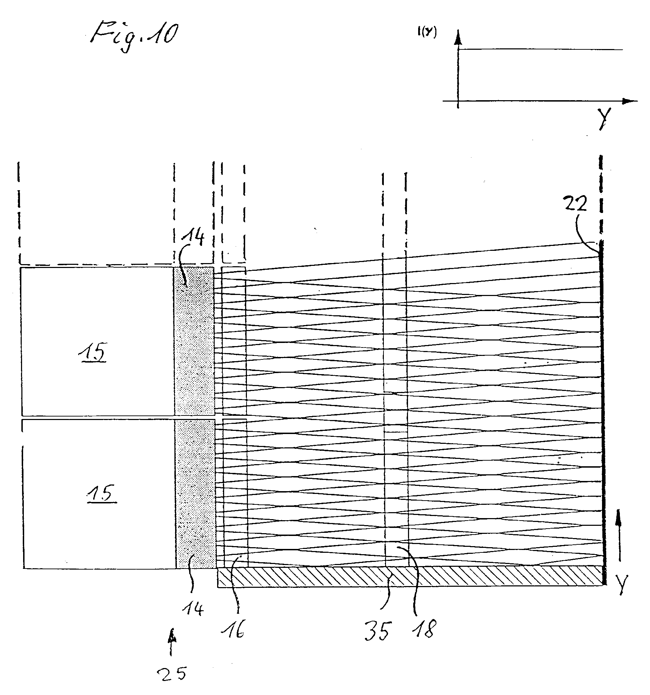

Die Figuren 2 und 3 zeigen als Teil eines ersten erfindungsgemäßen Ausführungsbeispiels in Seitenansicht und Draufsicht eine Strahlquelle, die aus einer Laserdiodenanordnung besteht. Laserdioden haben wesentliche Vorteile. Die Lebensdauer der Laserdioden liegt bei mehr als 2.000 Stunden. Laserdioden bedürfen keiner Wartung und ihr Wirkungsgrad liegt bei 30 bis 50%. Das Verhältnis erzielbare Wattzahl zu Laservolumen liegt bei Laserdioden bei 1000 W pro cm³ Laservolumen.

Aus den Figuren 2 und 3 sind Laserdiodenbarren 14 zu erkennen, die aus Laserdioden gebildet werden. Jedem Laserdiodenbarren 14 ist ein als Wärmesenke wirkendes Kühlelement 15 zugeordnet. Ein derartiger Laserdiodenbarren 14 hat beispielsweise eine Länge von 10 mm, eine Breite von 0,6 mm und eine Höhe von 0,1 mm. An der Längsseite eines einzigen Laserdiodenbarrens 14 können beispielsweise 800 einzelne Laserdioden auf einer Ebene nebeneinander, zu einem Laserdiodenbarren aufgereiht sein. Die Laserdioden dieses Laserdiodenbarrens können eine Leistung von etwa 50 W erreichen. Das Kühlelement 15 hat beispielsweise eine Dicke von 0,3 bis 2 mm. In dem Kühlelement können Öffnungen für ein flüssiges oder gasförmiges Kühlmittel zur Abführung der Betriebswärme vorgesehen sein. Stapelt man diese Laserdiodenbarren 14 bzw. die Kühlelemente 15 übereinander, so kann eine Packungsdichte bis zu 25.000 einzelnen Laserdioden pro cm² erzielt werden. Jede einzelne Laserdiode hat etwa eine Strahlfläche von 1 x 3 µm². Aufgrund dieser kleinen Abstrahlungsfläche besitzt die emittierte Laserstrahlung einen großen Divergenzwinkel und zwar typischerweise 30° bis 100° in der Ebene senkrecht zur aktiven Laserdiodenschicht und einen Winkel < 30° in der Ebene parallel zur aktiven Laserdiodenschicht.

Die beschriebenen Laserdiodenbarren 14 für Laserdioden lassen sich zu beliebigen Längen nebeneinander auf eine Ebene aufreihen, wobei die Längenausdehnung der Laserdiodenbarren 14 in einer Ebene durch den jeweiligen Anwendungsfall definiert wird und auch einige Meter Längenausdehnung erreichen kann. Darüber hinaus lassen sich die auf einer Ebene aufgereihten Laserdiodenbarren 14 beliebig übereinander stapeln. Damit wird eine Gesamtlaserdiodenanordnung 25 gebildet, die eine sehr hohe Gesamtleistung erzielen kann. Es läßt sich so eine völlig homogene Leistungsdichteverteilung hoher Leistung der Laserstrahlung 10 und eine große Ausdehnung in y-Richtung erzielen, wie es in der Regel für das Plattieren von Metallplatten erforderlich ist.

Die auf jeder einzelnen Ebene mit nebeneinander aufgereihten Laserdiodenbarren 14 von Laserdioden ausgestrahlte Laserstrahlung 10 wird durch eine gemeinsame in Barrenform ausgeführte zylindrische Mikrolinse 16 erfaßt und als Parallelstrahlung weitergegeben. Die auf jeder Ebene von den nebeneinander angeordneten Laserdiodenbarren 14 mit Laserdioden ausgehende Laserstrahlung 10 wird also zur Kollimation durch zylindrische Mikrolinsen 16 erfaßt, wobei die zylindrischen Mikrolinsen sich senkrecht zur aktiv abstrahlenden Fläche über den Laserdioden angeordnet sind. Für jede Ebene mit Laserdiodenbarren 14 wird also eine eigene zylindrische Mikrolinse 16 vorgesehen, wobei die Mikrolinsen 16 durchgehend über die gesamte Längenausdehnung der Laserdiodenbarren 14 ausgeführt sein können oder aber auch segmentiert zu einzelnen nebeneinander angeordneten Abschnitten von zylindrischen Mikrolinsen 16 ausgestaltet sein können. Die Länge der in Barrenform ausgeführten zylindrischen Mikrolinsen 16 entspricht dabei mindestens der Gesamtlängenausdehnung der Laserdiodenbarren 14 auf dieser Ebene . Den zylindrischen Mikrolinsen 16 ist dann ein in Richtung zur Fügestelle 3 der zu plattierenden Metallplatten 1, 2 keilförmig zulaufendes Prisma 17 nachgeschaltet. Das zur Fügestelle 3 keilförmig zusammenlaufende Prisma 17 ist dabei derart ausgebildet, daß der Eintrittsdurchmesser 19, der Austrittsdurchmesser 20 und die Länge 21 des Prismas selbst so bemessen sind, daß für die durchtretende Laserstrahlung 10 der Gesamtdiodenanordnung 25 immer Totalreflexion in dem Prisma 17 gegeben ist. Es können auch mehrere derartige Prismen 17 parallel nebeneinander derart angeordnet sein, so daß sich mehrere Prismensegmente über die gesamte Längenausdehnung in x-Richtung der Laserdiodenbarren 14 erstrecken, was jedoch in den Figuren nicht dargestellt ist. Dadurch wird eine noch größere Homogenität der Leistungsdichteverteilung erzielt. Das keilförmig zusammenlaufende Prisma 17 wird in den Strahlengang der Strahlenquelle geschaltet, um eine möglichst gleichförmige Intensitätsverteilung der Laserstrahlung 10 entlang der Fügelinie 4 auf der Spaltebene 11 zu erzielen. Denn lokale Schwankungen der Homogenität der Leistungsdichteverteilung auf dem rechteckförmigen Strahlquerschnitt jeglicher Art führen zu inhomogener Temperaturverteilung entlang der Fügelinie 4 und damit besonders beim Plattieren zu Bereichen, die entweder angeschmolzen sind, oder nicht verbunden werden. Durch das keilförmig zusammenlaufende Prisma 17 wird die Überlagerung der Teilstrahlen und Homogenität der Strahlung besonders gefördert.

Die den Austrittsdurchmesser 20 des Prismas 17 verlassende Laserstrahlung 10 wird zur Bildung eines rechteckförmigen Strahlquerschnitts 22 über eine ebenfalls in Barrenform ausgeführte Zylinderlinse 18 geführt. Die Zylinderlinse 18 erstreckt sich mindestens über die gesamte Längenausdehnung der nebeneinander angeordneten Laserdiodenbarren 14 und erfaßt auch alle Laserstrahlung aus der Höhenausdehnung der übereinander gestapelten Laserdiodenbarren 14. Der rechteckförmige Strahlquerschnitt 22 hat nicht nur eine Längenausdehnung y-Richtung, sondern auch eine Höhenausdehnung in z-Richtung, die ihm seine rechteckförmige Gestalt gibt. Die Höhenausdehnung in z-Richtung des rechteckförmige Strahlquerschnitt 22 ist abhängig von den gewählten Brennweiten und der Abbildungsqualität der Optiken. Beispielsweise wird bei einer Brennweite der Mikrolinsen von einem Millimeter und einer Brennweite der Zylinderlinse von 100 mm eine Ausdehnung des rechteckförmigen Strahlquerschnitts in z-Richtung von 500 µm erreicht. Aufgrund dieser Ausdehnung in z-Richtung des rechteckförmigen Strahlquerschnitts 22 ermöglicht die erfindungsgemäße Strahlquelle bzw. die von ihr abgegebene Laserstrahlung 10 mittels dieses rechteckförmigen Strahlquerschnitts 22 nur örtlich begrenzte Zonen geringer räumlicher Tiefe an den beiden jeweils zu plattierenden Oberflächen 8 und 9 der Metallplatten 1 und 2 derart zu erwärmen, daß die Materialien der beiden zu verbindenden Oberflächen 8, 9 exakt im plastischen Zustand verharren, der für die Verbindung erforderlich ist. Eine Steuerung dieses plastischen Zustands der Oberflächen 8, 9 der beiden zu verbindenden Metallplatten 1, 2 , ist durch die Veränderung der Vorschubgeschwindigkeit 23 (siehe Pfeil in Fig. 1) der beiden zu plattierenden Metallplatten 1 und 2 und/oder die Änderung der von der Gesamtlaserdiodenanordnung 25 abgestrahlten Laserleistung zu beeinflussen.

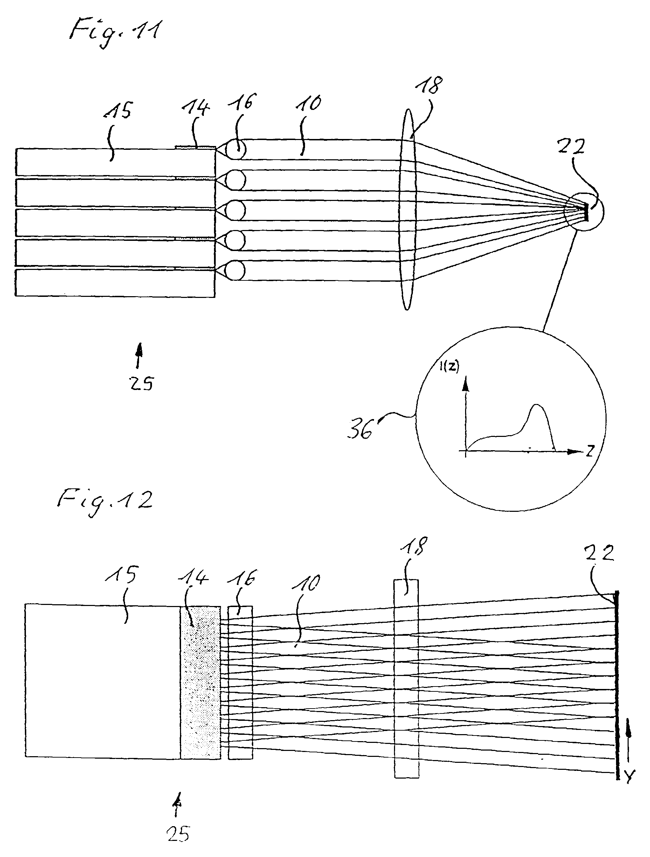

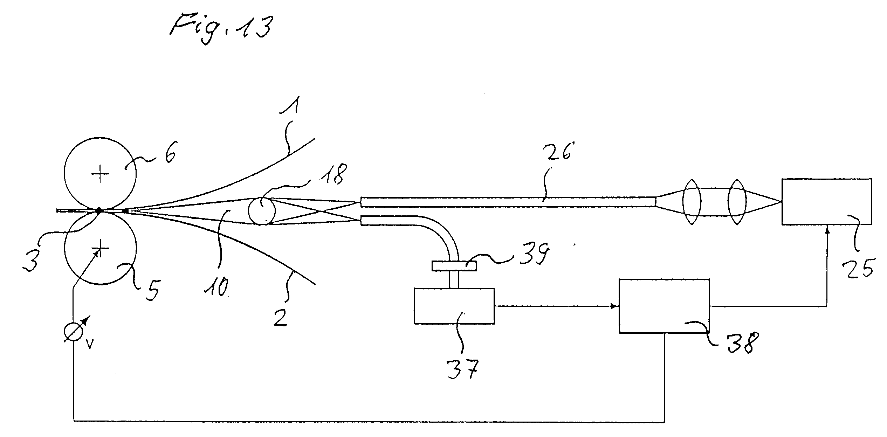

An Stelle einer in Barrenform ausgeführten Zylinderlinse 18 kann der Austrittsdurchmesser 20 bzw. die zur Fügestelle 3 gerichtete Austrittsfläche des keilförmig zusammenlaufendes Prismas 17 als halbzylindrische Endfläche 24 ausgeführt sein. Die durch das Prisma 17 tretende Laserstrahlung 10 wird durch die halbzylindrisch ausgeführte Endfläche 24 des Prismas 17 ebenfalls in einem rechteckförmigen Strahlquerschnitt 22 gebündelt, der auf die Fügestelle 3 gerichtet wird, siehe dazu eine entsprechende Seitenansicht in Figur 4 und eine Draufsicht in Figur 5.

In Figur 6 ist eine Prinzipdarstellung einer zweiten erfindungsgemäßen Vorrichtung zum Plattieren gezeigt, bei der zwischen der Gesamtdiodenanordnung 25 und der Fügestelle 3 an Stelle eines keilförmig zusammenlaufenden Prismas eine Glasplatte 26 mit rechteckigem Querschnitt angeordnet ist, die in der x-y-Ebene angeordnet ist. Bei dem zweiten Ausführungsbeispiel gemäß Figur 6 und im Ausführungsbeispiel nach Figur 7 werden gleiche Teile und Teile mit gleichen Funktionen gemäß dem ersten Ausführungsbeispiel nach den Figuren 1 bis 5 mit gleichen Bezugszeichen belegt. Gleiche Teile und Funktionen in dem zweiten Ausführungsbeispiel nach den Figuren 6 und 7 werden nur verkürzt wiederholt, da eine ausführliche Beschreibung bereits bei dem ersten Ausführungsbeispiel erfolgt ist. Auch bei dem zweiten Ausführungsbeispiel wird die Laserstrahlung zu einem Strahl mit rechteckförmigem Strahlquerschnitt 22 umgeformt. Die Laserstrahlung 10 verläuft parallel zur Spaltebene 11 in der x-y-Ebene, die durch die Begrenzungslinien 12 und 13 dargestellt wird, siehe dazu Figur 1. Die Laserstrahlung 10 ist auch wiederum senkrecht zur Fügelinie 4 gerichtet. Die polarisierte Laserstrahlung schwingt parallel zur Spaltebene 11 in der x-y-Ebene an der Fügestelle 3. Die zu verbindenden Metallplatten 1 und 2 werden wiederum mittels Walzen 5 und 6 an der Fügestelle 3 zusammengepreßt. Als Strahlquelle wird wiederum eine Gesamtlaserdiodenanordnung 25 verwendet, bei der die Laserstrahlung 10 stets aus mehreren auf einer Ebene nebeneinander zu Laserdiodenbarren 14 aufgereihten Laserdioden gebildet wird. Die Laserdiodenbarren sind dabei sowohl in Längsrichtung nebeneinander zu durch den Anwendungsfall definierter Längenausdehnung angeordnet, wie sie auch in der Höhe übereinander zu Stapeln gelegt werden können, um die abgestrahlte Leistung zu erhöhen.

Gemäß Figur 6 wird die von der Gesamtlaserdiodenanordnung 25 ausgehende Laserstrahlung 10 direkt einer Glasplatte 26 mit rechteckigem Querschnitt zugeführt. In Längsrichtung in der Glasplatte 26 mit rechteckigem Querschnitt zwischen der Eintrittsöffnung 31 und der Austrittsöffnung 32 herrscht für die durchtretende Laserstrahlung 10 Totalreflexion. Die vier Längsseiten der Glasplatte 26 mit rechteckigem Querschnitt, also die Oberseite 27 und die Unterseite 28, sowie die beiden Seitenflächen 29 und 30 sind zu diesem Zweck beispielsweise mit einer Spiegelschicht versehen. Die Glasplatte 26 mit rechteckigem Querschnitt wirkt also wie ein Integrator und erhöht die Homogenität der durchtretenden Laserstrahlung 10. In der Glasplatte mit rechteckigem Querschnitt erfolgen die Reflexionen der Laserstrahlung also an allen vier Längsseiten.

Die Breite in y-Richtung der Glasplatte 26 mit rechteckigem Querschnitt wird sich sowohl in y-Richtung auf die gesamte Längenausdehnung der Gesamtlaserdiodenanordnung 25 erstrecken, wie sich auch die Ausdehnung z-Richtung der Glasplatte 26 entsprechend an der Höhe der übereinander gestapelten Laserdiodenbarren 14 in z-Richtung bemessen wird. Zur Bildung des rechteckförmigen Strahlquerschnitts 22 ist nach der Austrittsöffnung 32 der Glasplatte 26 mit rechteckigem Querschnitt eine in Barrenform ausgeführte Zylinderlinse 18 vorgesehen, die sich mindestens über die gesamte Längen- und Höhenausdehnung der nebeneinander angeordneten Laserdiodenbarren 14 bzw. Stapel erstreckt. Die Bildung des rechteckförmigen Strahlquerschnitts 22 der Laserstrahlung 10 kann jedoch auch dadurch erfolgen, daß die zur Fügestelle 3 gerichtete Austrittsfläche 32 der Glasplatte 26 als halbzylindrische Endfläche ausgeführt ist, was jedoch in den Figuren nicht dargestellt ist. Darüber hinaus kann zusätzlich wahlweise auch die Eintrittsfläche 31 der Glasplatte 26 gekrümmt geformt sein, was ebenfalls nicht dargestellt ist. Die halbzylindrische Endfläche bzw. die gekrümmt Eintrittsfläche wird sich mindestens über die gesamte Längen- und Höhenausdehnung der nebeneinander angeordneten Laserdiodenbarren 14 bzw. Stapel erstrecken.

Aus Figur 7 ist das zweite Ausführungsbeispiel der Erfindung in Zusammenarbeit mit mehreren Glasplatten ersichtlich. Dort sind zwei gekrümmte Glasplatten 33 und 34 mit rechteckigem Querschnitt und eine gerade Glasplatte 26 zu dem Zweck vereint, eine höhere Leistung in dem rechteckförmigen Strahlquerschnitt 22 zu erzielen. Jeder Eintrittsöffnung 31 der Glasplatten 26, 33 und 34 sind jeweils Gesamtlaserdiodenanordnungen 25 zugeordnet, wie sie bereits beschrieben worden sind. Die Austrittsöffnungen 32 der drei Glasplatten sind so zusammengeführt, daß sie gemeinsam auf eine Zylinderlinse 18 gerichtet sind. Die Glasplatten mit rechteckigem Querschnitt sind also übereinander gestapelt und die aus den Glasplatten austretende Laserstrahlung 10 wird einer gemeinsamen in Barrenform ausgeführten Zylinderlinse 18 zur Bildung eines einzigen gemeinsamen rechteckförmigen Strahlquerschnitt 22 zugeführt. Selbstverständlich können auch mehr als drei Glasplatten mit rechteckigem Querschnitt zusammengeführt werden und so eine sehr hohe Leistung im rechteckigförmigen Strahlquerschnitt zum Plattieren erzeugt werden.

Statt die abgestrahlte Laserstrahlung der Gesamtlaserdiodenanordnungen 25 direkt den Eintrittsöffnungen 31 der Glasplatten 26, 33 und 34 mit rechteckigem Querschnitt zuzuführen, können auch zwischen die Gesamtlaserdiodenanordnungen 25 und die Glasplatten 26, 33 und 34 mit rechteckigem Querschnitt zur zusätzlichen Kollimation senkrecht zur aktiven abstrahlenden Schicht der Laserdioden angeordnete zylindrische Mikrolinsen geschaltet werden, was jedoch in den Figuren nicht dargestellt ist. Für alle auf einer Ebene nebeneinander aufgereihten Laserdiodenbarren 14 ist erneut eine gemeinsame in Barrenform ausgeführte zylindrische Mikrolinse 16 vorgesehen. Die Längen der zylindrischen Mikrolinsen 16 entsprechen dabei der Gesamtlängenausdehnung der Laserdiodenbarren 14 auf der jeweiligen Ebene.

Um die gleichförmige Intensitätsverteilung der Laserstrahlung in dem rechteckförmigen Strahlquerschnitt 22 noch zu steigern, können an den Seiten der Glasplatten 26, 33 und 34 Ultraschallgeber angebracht werden. Diese Ultraschallgeber erzeugen eine gitterähnliche Störung und lenken dadurch die Diodenstrahlung ab. Durch eine hochfrequente Änderung dieser Ablenkung folgt eine Oszillation des Strahlenproflis. Dadurch können auftretende Inhomogenitäten der Intensitätsverteilung im zeitlichen Mittel ausgeglichen werden. Damit können angeschmolzene oder nichtverbundene Zonen der Oberflächen 8, 9 der zu plattierenden Metallplatten 1 und 2 vermieden werden.

In den Figuren 8, 9 und 10 ist eine Prinzipdarstellung in Seitenansicht und Draufsicht einer dritten erfindungsgemäßen Vorrichtung zum Plattieren mit einer Gesamtlaserdiodenanordnung gezeigt. Gleiche Teile und Funktionen wie bei dem ersten Ausführungsbeispiel nach den Figuren 1 bis 5 werden mit gleichen Bezugszeichen versehen und nur noch in Kurzform erläutert.

Die dritte erfindungsgemäße Vorrichtung unterscheidet sich von der ersten Vorrichtung im wesentlichen dadurch, daß an Stelle eines keilförmig zulaufenden Prismas reflektierende Begrenzungsvorrichtungen 35 für die Laserstrahlung 10 vorgesehen sind. Auch bei dem dritten Ausführungsbeispiel verläuft die Laserstrahlung 10 im wesentlichen parallel zur Spaltebene 11 in der x-y-Ebene an der Fügestelle 3. Die Laserstrahlung ist im wesentlichen senkrecht zur Fügelinie 4 gerichtet und schwingt bei polarisierter Strahlung überwiegend parallel zur Spaltebene 11 in der x-y-Ebene an der Fügestelle 3.

Auch hier werden die zu plattierenden Metallplatten 1 und 2 in der Erwärmungszone an der Fügestelle 3 bzw. der Fügelinie 4 mittels zwei Walzen 5 und 6 mit der Walzkraft 7 zusammengedrückt, wobei die Walzvorrichtung und alle zusätzlichen Einrichtungen zum Plattieren der Übersichtlichkeit halber nicht dargestellt wurden.

Als Strahlquelle werden wiederum Laserdioden verwendet. Die Laserdioden bilden eine Gesamtlaserdiodenanordnung 25 derart, daß die Laserstrahlung 10 stets aus mehreren auf einer Ebene nebeneinander zu Laserdiodenbarren 14 aufgereihten Laserdioden gebildet wird. Die Laserdiodenbarren 14 sind sowohl in Längsrichtung zu durch den Anwendungsfall definierter Längenausdehnung angeordnet, als auch übereinander zu Stapeln gelegt. Die auf jeder Ebene mit Laserdiodenbarren 14 von Laserdioden ausgehende Laserstrahlung 10 wird zur Kollimation über senkrecht zur aktiven abstrahlenden Schicht der Dioden angeordnete zylindrische Mikrolinsen 16 geleitet. Für alle auf einer Ebene liegenden nebeneinander aufgereihte Laserdiodenbarren 14 wird eine gemeinsame in Barrenform ausgeführte zylindrische Mikrolinse 16 vorgesehen. Die Länge der zylindrischen Mikrolinsen 16 entspricht der Gesamtlängenausdehnung der Laserdiodenbarren 14 auf dieser Ebene. Die über die Mikrolinsen 16 aus der Gesamtlaserdiodenanordnung austretende Strahlung wird danach zur Bildung des rechteckförmigen Strahlquerschnitts 22 einer ebenfalls in Barrenform ausgeführten Zylinderlinse 18 zugeführt, die den rechteckförmigen Strahlquerschnitt 22 formt. Die Zylinderlinse 18 erstreckt sich über die gesamte Längen- und Höhenausdehung der nebeneinander angeordneten Laserdiodenbarren 14 bzw. Stapel. In Folge der Ausbildung eines rechteckförmigen Strahlquerschnitts 22 erwärmt die Laserstrahlung 10 mittels des rechteckigen Strahlquerschnitts nur örtlich begrenzte Zonen geringer räumlicher Tiefe an den beiden jeweils zu plattentierenden Oberflächen 8, 9 der Metallplatten 1 und 2 in den plastischen Zustand.

Wie aus der Darstellung der Laserstrahlung 10 in der Figur 9 erkennbar ist, wird die von den Dioden der Laserdiodenbarren 14 ausgestrahlte Laserstrahlung etwa in einem Winkel < 30° in der Ebene parallel zu der aktiven Laserdiodenschicht abgestrahlt. Dies führt dazu, daß an den Enden des rechteckförmigen Strahlquerschnitts 22 ein Abfall der Intensität der Strahlung auftritt, siehe dazu Figur 9 und 10. Die Intensität der Strahlung entlang des rechteckförmigen Strahlquerschnitts 22 ist in einem kleinen Diagramm dargestellt. Um diesen Abfall der Intensität des rechteckförmigen Strahlquerschnitts 22 an den Enden des Fokus zu vermeiden, werden reflektierende Begrenzungsvorrichtungen 35 vorgesehen, die durch Reflexion den Intensitätsabfall der Laserstrahlung 10 wieder aufheben. In Figur 10 ist eine derartige Begrenzungsvorrichtung 35 eingezeichnet, die beispielsweise aus einer verspiegelten Fläche oder aus jedem anderen für eine derartige Reflexion geeigneten Mittel bestehen kann. Aus der Figur 10 bzw. dort dargestellten Laserdiodenbarren 14 aus Laserdioden ist nochmals zu ersehen, daß zwei oder beliebig viele weitere Laserdiodenbarren 14 nebeneinander in einer Ebene aufgereiht werden können, um so einen rechteckförmigen Strahlenquerschnitt bis über die Metergrenze hinaus zu erzeugen. An dem hier nicht dargestellten zweiten Ende der Laserdiodenbarren wird dann ebenfalls eine reflektierende Begrenzungsvorrichtung 35 angebracht.

Auch bei dem dritten wird genauso wie bei dem ersten und zweiten Ausführungsbeispiel durch Absorption der Laserstrahlung 10 in dem Bereich kurz vor der Fügelinie 4 der in einem V-förmigen Spalt zusammengeführten Metallplatten 1 und 2 und deren Umsetzung in thermische Energie eine Erwärmung in den Bereich kurz vor der Fügelinie erzeugt. Dadurch werden die zu verbindenden Oberflächen 8, 9 der Metallplatten 1 und 2 in den plastischen Zustand versetzt. Gleichzeitig wird durch den Druck der Walzen 5 und 6 an der Fügestelle 3 eine homogene Verbindung der beiden Metallplatten 1 und 2 erreicht. Die Temperatur in dem Bereich kurz vor der Fügelinie soll dabei eindeutig unter der Schmelztemperatur der Metallplatten 1 und 2 bzw. des Grund- bzw. Auflagewerkstoffes liegen, so daß ein Anschmelzen der Metallplatten ausgeschlossen ist.

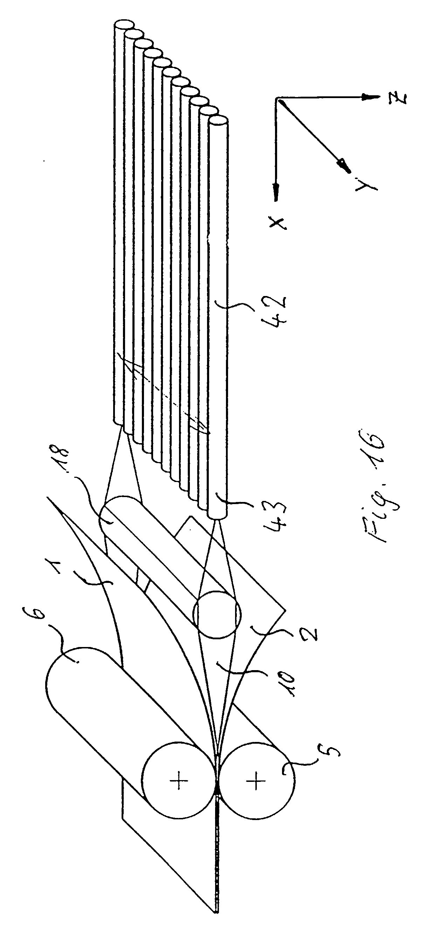

In Figur 16 ist in teilweise perspektivischer Darstellung das Prinzip einer vierten erfindungsgemäßen Vorrichtung zum Plattieren gezeigt, wobei zur Homogenisierung der Leistungsdichteverteilung der Laserstrahlung ein spezielles noch näher zu beschreibendes Lichtleiterfaserbündel angeordnet wird. Auch bei der vierten erfindungsgemäßen Vorrichtung wird mittels strahlformender optischer Mittel die Laserstrahlung in einen Strahl mit rechteckigen Strahlquerschnitt umgeformt. Diese Laserstrahlung steht wiederum senkrecht auf der Fügelinie 4. Die zu plattierenden Metallplatten 1 und 2 werden direkt an der Fügestelle 3 bzw. der Fügelinie 4 unter dem Druck 7 zweier Walzen 5 und 6 zusammengedrückt. Als Strahlquelle werden wiederum Laserdioden verwendet, und die Laserstrahlung 10 dieser Dioden wird stets aus mehreren auf einer Ebene nebeneinander zu Laserdiodenbarren 14 aufgereihten Laserdioden gebildet. Die Laserdiodenbarren 14 sind sowohl in Längsrichtung, also in der y-Richtung, zu durch den Anwendungsfall definierter Längenausdehnung angeordnet, als auch übereinander in z-Richtung zu Stapeln gelegt und bilden damit die Gesamtlaserdiodenanordnung 25. Die von der Gesamtlaserdiodenanordnung 25 ausgehende Laserstrahlung 10 wird direkt einem ersten Lichtleiterfaserbündel 42 zugeführt. Das erste Lichtleiterfaserbündel 42 wird als lineares Faserbündel mit parallel nebeneinanderliegenden Lichtleitern ausgebildet. Dabei sind die Lichtleiter des ersten Lichtleiterfaserbündels 42 an ihrem den zu plattierenden Metallplatten 1 und 2 zugewandten Ende 43, kurz vor dem Austritt zu der Zylinderlinse 18 hin, starr miteinander verbunden. Das Ende 43 des ersten Lichtleiterfaserbündels 42 ist nun mit Mitteln zur Erzeugung von hochfrequenten mechanischen Schwingungen umgeben. D.h., daß die am Ende 43 des ersten Lichtleiterfaserbündels 42 starr miteinander verbunden Lichtleiter gemeinsam zu hochfrequenten Schwingungen angeregt werden. Die Auslenkungen dieser mechanischen Schwingungen des Endes 43 des Lichtleiterfaserbündels 42 sind dabei derart ausgelegt, daß die Abbildung der Laserstrahlung einer Lichtleiterfaser an der Fügestelle 3 bzw. der Fügelinie 4 durch Oszillation den Bereich von mindestens einer benachbarten Abbildung einer anderen Lichtleitfaser überstreicht. Durch diese Oszillation des Endes 43 des Lichtleiterfaserbündels 42 wird also auf der Fügelinie erreicht, daß die in den Lichtleiterfasern ortsgetreu übertragenen Laserstrahlungen im Bereich der Erwärmung der beiden Metallplatten 1 und 2 homogenisiert wird. Die hochfrequenten mechanischen Schwingungen des Endes 43 können beispielsweise mittels Piezokristallen, mit elektromagnetischen Mitteln oder mit jedem anderen für die Erzeugung einer derartigen hochfrequenten Schwingung geeigneten Mittel erreicht werden. In Folge der Ausbildung der Laserstrahlung 10 mit einem rechteckförmigen Strahlquerschnitt, der in z-Richtung nur eine geringe Höhe aufweist, wird schließlich wiederum nur eine örtlich begrenzte Zone geringer räumlicher Tiefe an den beiden jeweils zu plattierenden Oberflächen 8 und 9 der Metallplatten 1 und 2 in den plastischen Zustand zum Plattieren erwärmt. Die hochfrequenten mechanischen Schwingungen am Ende 43 des Lichtleiterfaserbündels 42 werden dabei in einem Winkel von 90° zur Richtung der Laserstrahlung, also in z-Richtung, und gleichzeitig in der Ebene selbst, die durch die Richtung des Lichtleiterfaserbündels aufgespannt wird, also in der x-y-Ebene, ausgeübt. Läßt man das Ende 43 des Lichtleiterfaserbündels 42 gleichmäßig oszillieren, so erzielt man damit eine homogenisierende Wirkung für die Laserstrahlung bzw. das Temperaturprofil.

Bei allen vier bisher geschilderten Ausführungsbeispielen der erfindungsgemäßen Vorrichtung läßt sich auch die Strahlquelle von den Anordnungen zur Homogenisierung der Laserstrahlung 10 örtlich bzw. räumlich trennen. Damit kann man erreichen, daß die Strahlquelle bzw. die Laserdiodengesamtanordnung 25 sich nicht am Ort der Fokusierung der Laserstrahlung 10 befindet. Dazu wird zwischen der Laserdiodengesamtanordnung 25 oder der vorgeschalteten Mikrolinse 16 einerseits und dem keilförmig zusammenlaufenden Prisma 17 oder der Glasplatte mit rechteckigem Querschnitt 26 oder der Anordung von reflektierenden Begrenzungsvorrichtungen 25 andererseits ein zweites Lichtleiterfaserbündel 44 zum Transport der Laserstrahlen 10 über weite Strecken anordnet. Das zweite Lichtleiterfaserbündel 44 ist in den Figuren jedoch nicht dargestellt.

Während in der Regel die Homogenität der Leistungsdichteverteilung der Laserstrahlung auf dem rechteckförmigen Strahlquerschnitt beim Plattieren maßgeblich ist, kann in Sonderfällen eine ungleichmäßige Verteilung der Intensität der Laserstrahlung außerhalb des Fokus notwendig sein. Aus den Figuren 11 und 12 ist das dritte Ausführungsbeispiel nach Figur 8 in Seitenansicht und in Draufsicht mit veränderbarer Intensität der Laserstrahlung im Bereich außerhalb des Fokus dargestellt. Wie schon bei dem ersten Ausführungsbeispiel erläutert, besitzt der rechteckförmige Strahlquerschnitt 22 auch eine gewisse räumliche Höhe in z-Richtung, die erforderlich ist, um die beiden Oberflächen 8, 9 der zu verbindenden Metallplatten 1 und 2 in den Bereich kurz vor der Fügelinie 4 zu erwärmen und in den plastischen Zustand überzuführen. Die Formung der kollimierten Strahlung 10 ist durch eine spezielle Justage der zylindrischen Mikrolinsen 16 oder durch eine geeignete und nicht gleichmäßige Verteilung der Laserdioden bzw. Laserdiodenbarren 14 über die Stapelhöhe möglich. Durch diese zylindrischen Mikrolinsen 16 wird eine Vergrößerung des Fokusbereiches bewirkt, so daß eine Vielzahl von Intensitätsprofilen erreicht werden kann, siehe dazu das der Figur 11 zugeordnete Diagramm der Intensitätsverteilung über die Länge des rechteckförmigen Strahlquerschnitts 22 in dem Kreis 36. Durch die ungleichmäßige Verteilung der Laserdioden bzw. der Laserdiodenbarren 14 über die Stapelhöhe bleibt die Verteilung im Fokus zwar unberührt, im defokussierten Bereich davor und dahinter liegen aber variable Verteilungen der Intensität vor.

Legt man bei dem ersten, zweiten oder dritten Ausführungsbeispiel vor die Fügestelle 3 eine Zylinderlinse 18, wobei die Zylinderlinse den rechteckförmigen Strahlquerschnitt 22 an der Fügestelle 3 bzw. der Fügelinie 4 erzeugt, so läßt sich mittels der Zylinderlinse 18 auch die von der Fügestelle 3 bzw. der Fügelinie 4 und dem davor liegenden unmittelbaren Bereich die Wärmestrahlung dieses Spaltes zur Messung der Ist-Temperatur heranziehen, siehe dazu Figur 13. Die von der Zylinderlinse 18 ausgekoppelte Wärmestrahlung um den Plattierungsort wird einer Detektorzeile 37 zur Erzeugung eines temperaturproportionalen Signals zugeführt. Zwischen der Detektorzeile 37 und der Zylinderlinse 18 ist ein Filter 39 einzuschalten, das die Aufgabe hat, das von der Fügestelle 3 bzw. der Fügelinie reflektierte Diodenlicht von der Detektorzeile 37 abzuhalten. Das Signal der Detektorzeile 37 wird zum Vergleich der Soll-Temperatur an der Fügestelle 3 bzw. Fügelinie 4 mit der Ist-Temperatur einem Regelkreis 38 zur Änderung der Leistung der Gesamtlaserdiodenanordnung 25 und/oder der Änderung der Vorschubgeschwindigkeit der Metallplatten 1 und 2 durch die Walzen 5 und 6 zur Steuerung der vorgegebenen Plattierungstemperatur in einem zulässigen Bereich zugeführt. Die Länge der Detektorzeile 37 und die Länge der Zylinderlinse 18 entspricht dabei der Gesamtlängenausdehnung der Fügelinie 4, so daß eine Messung über die gesamte Plattierungsbreite der beiden Metallplatten 1, 2 möglich ist.

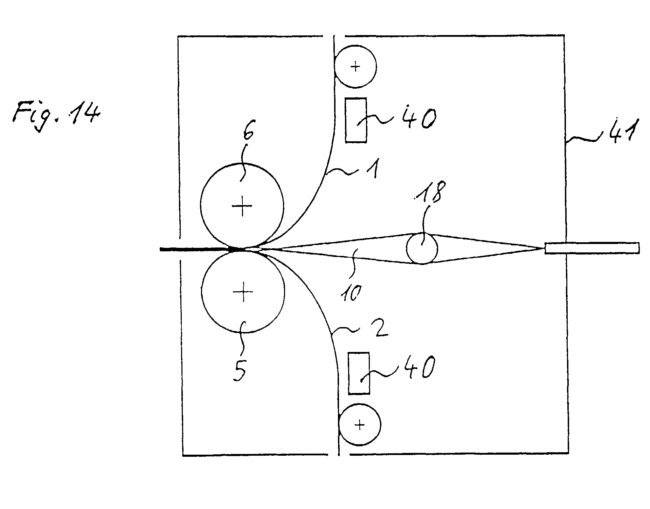

Eine Verringerung der benötigten Leistung der Laserstrahlung 10 der Gesamtlaserdiodenanordnung 25 läßt sich dadurch erreichen, daß die zu plattierenden Metallplatten 1 und 2 auf den zu verbindenden Oberflächen- 8, 9 bzw. Innenseiten kurz vor der Fügung und dem Einlauf in die Laserstrahlung 10 durch bandförmig gestaltete Induktionsheizung 40 vorgewärmt werden, siehe dazu Figur 14. Bei einer derartigen Vorwärmung mit Induktionsheizungen ist der Bereich, in dem die Fügung stattfindet, mit Schutzgas zu umspülen. Als Schutzgas kann beispielsweise Argon oder jedes andere für einen derartigen Zweck geeignete Gas verwendet werden. Die Plattierung erfolgt bei einer Vorwärmung und Schutzgasumspülung zweckmäßigerweise in einer Schutzgaskammer 41.

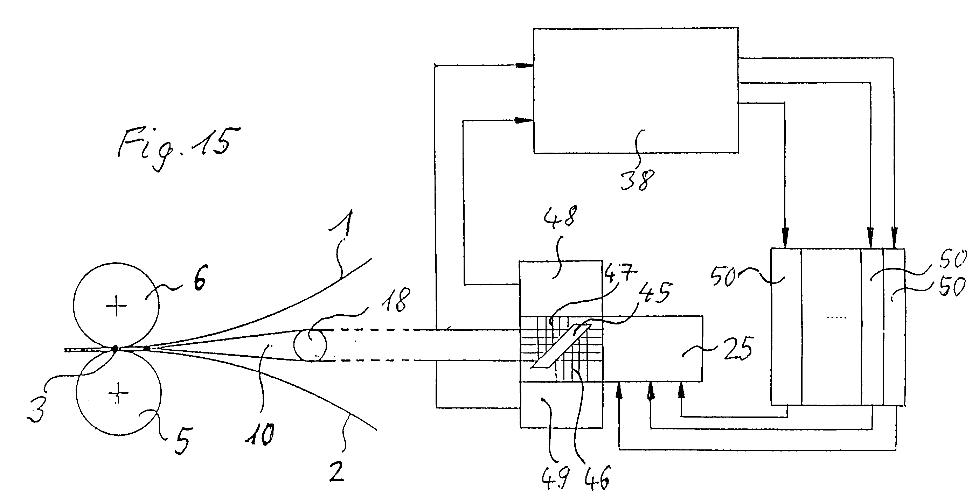

Eine Änderung der Leistungsdichteverteilung der Laserstrahlung 10 mit rechteckförmigen Strahlquerschnitt bzw. eine Änderung der durch diese Laserstrahlung bewirkten Temperaturverteilung an der Fügestelle 3 bzw. der Fügelinie 4 der zu plattierenden Metallplatten 1 und 2 erfolgt durch die Steuerung der Laserdiodenausgangsleistung der Gesamtlaserdiodenanordnung 25. Wie anhand der Figur 13 bereits gezeigt wurde, wird der Plattierungsprozeß durch entsprechende Meßvorrichtungen überwacht. Eine weitere Meßvorrichtung für den Plattierungsvorgang ist in Figur 15 gezeigt. Die Gesamtlaserdiodenanordnung 25 erzeugt die Laserstrahlung 10. In Strahlungsrichtung der Laserstrahlung 10 zu den zu plattierenden Metallplatten hin gesehen ist unmittelbar vor der Gesamtlaserdiodenanordnung 25 ein teildurchlässiger Spiegel 45 angeordnet. Aus der schematischen Darstellung des teildurchlässigen Spiegels 45 und seiner Stellung zu der Gesamtlaserdiodenanordnung 25 läßt sich ersehen, daß die von der Gesamtlaserdiodenanordnung 25 herrührende Laserstrahlung 10 ortsgetreu ausgekoppelt wird und derart eine Bestimmung der flächenmäßigen Verteilung der Laserstrahlung 10 möglich ist. Es wird dabei lediglich ein kleiner Bruchteil 46 der Laserstrahlung 10 ausgekoppelt und mittels einer Detektorreihe 49 für die von der Gesamtlaserdiodenanordnung 25 stammende Laserstrahlung erfaßt und in ein Meßsignal umgesetzt.

Mit dem teildurchlässigen Spiegel 45 läßt sich auch ein Bruchteil 47 der von der Fügestelle 3 bzw. der Fügelinie 4 reflektierten Laserstrahlung erfassen. Der Bruchteil 47 der reflektierten Strahlung wird einer Detektorreihe 48 zur Erfassung der von der Fügelinie reflektierten Strahlung zugeführt, die ein entsprechendes Signal erzeugt. Die von der Fügestelle 3 bzw. der Fügelinie 4 reflektierte Laserstrahlung wird ebenfalls entsprechend ihrer örtlichen Verteilung erfaßt , wodurch eine entsprechende zweidimensionale Abbildung der Fügestelle 3 bzw. der Fügelinie 4 entsteht. Zu der genauen Erfassung der von der Fügelinie 4 reflektierten Strahlung ist es zweckmäßig, die Auskoppelung des reflektierten Bruchteils 47 der Laserstrahlung in Emisionsrichtung der reflektierten Strahlung von der Fügestelle 3 her gesehen in unmittelbarer Nähe nach der Zylinderlinse 18 durchzuführen.

Ebenso wie bei der Meßeinrichtung bei der Figur 13 werden auch bei der Meßvorrichtung bei Figur 15 die jeweils von der Detektorreihe 48 für die von der Fügestelle reflektierte Laserstrahlung bzw. die von der Detektorreihe 49 für die von der Gesamtlaserdiodenanordnung 25 stammende Laserstrahlung 10 erzeugten Signale einem Regelkreis 38 zugeführt. Die jeweils gemessenen Ist-Werte werden mit den jeweiligen Soll-Werten verglichen und dann eine Änderung der Ausgangsleistung der Gesamtlaserdiodenanordnung 25 herbeigeführt. Dies erfolgt durch entsprechnde Steuerung von Netzgeräten 50, für die hier nur beispielhaft drei Stück ausgeführt sind, die wiederum die Laserdiodenbarren der Gesamtlaserdiodenanordnung 25 entsprechend steuern. Die Detektionen der jeweiligen Laserstrahlungen können in zeitlich sehr kurzen Abständen durchgeführt werden, deshalb ist eine entsprechend kurzzeitige, d.h. eine On-linie erfolgende, Steuerung der Ausgangsleistung der Gesamtlaserdiodenanordnung 25 möglich.

### Bezugszeichenliste

- 1: Metallplatte
- 2: Metallplatte
- 3: Fügestelle
- 4: Fügelinie
- 5: Walze
- 6: Walze
- 7: Walzkraft
- 8: Oberfläche
- 9: Oberfläche
- 10: Laserstrahlung
- 11: Spaltebene
- 12: Begrenzungslinie
- 13: Begrenzungslinie
- 14: Laserdiodenbarren
- 15: Kühlelement
- 16: Mikrolinse
- 17: keilförmig zusammen laufendes Prisma
- 18: Zylinderlinse
- 19: Eintrittsdurchmesser
- 20: Austrittsdurchmesser
- 21: Länge des Prismas
- 22: rechteckförmiger Strahlquerschnitt der Laserstrahlung 10
- 23: Vorschubgeschwindigkeit
- 24: halbzylindrische Endfläche
- 25: Gesamtlaserdiodenanordnung
- 26: Glasplatte mit rechteckigem Querschnitt
- 27: Oberseite
- 28: Unterseite
- 29: Seitenfläche
- 30: Seitenfläche
- 31: Eintrittsöffnung
- 32: Austrittsöffnung
- 33: gekrümmte Glasplatte mit rechteckigem Querschnitt
- 34: gekrümmte Glasplatte mit rechteckigem Querschnitt
- 35: reflektierende Begrenzungsvorrichtung
- 36: Kreis mit Diagramm
- 37: Detektorzeile
- 38: Regelkreis
- 39: Filter
- 40: Induktionsheizung
- 41: Schutzgaskammer
- 42: erstes Lichtleiterfaserbündel
- 43: Ende des ersten Lichtleiterfaserbündels
- 44: zweites Lichtleiterfaserbündel
- 45: teildurchlässiger Spiegel
- 46: Bruchteil der Laserstrahlung 10
- 47: Bruchteil der von der Fügelinie reflektierten Laserstrahlung
- 48: Detektorreihe für die von der Fügestelle reflektierte Laserstrahlung
- 49: Detektorreihe für die von der Gesamtlaserdiodenanordnung stammende Laserstrahlung 10
- 50: Netzgeräte

## Patentansprüche

1. Vorrichtung zum Plattieren von zwei oder mehreren Metallplatten oder -bändern durch Absorption von Laserstrahlungsenergie, die über strahlformende optische Mittel verfügt, wobei die Laserstrahlung zu einem Strahl mit rechteckförmigen Strahlquerschnitt umgeformt wird, der senkrecht zur Fügelinie gerichtet ist, und die zu plattierenden Metallplatten direkt an der Fügestelle unter dem Druck zweier Walzen zusammengedrückt werden, **dadurch gekennzeichnet,** daß als Strahlquelle Laserdioden verwendet werden, daß die Laserstrahlung (10) stets aus mehreren auf einer Ebene nebeneinander zu Laserdiodenbarren (14) aufgereihten Laserdioden gebildet wird, daß die Laserdiodenbarren (14) sowohl in Längsrichtung (y-Richtung) zu durch den Anwendungsfall definierter Längenausdehnung angeordnet, als auch übereinander in z-Richtung zu Stapeln gelegt sind, und damit eine Gesamtlaserdiodenanordnung (25) gebildet wird, daß die auf jeder x-y-Ebene mit Laserdiodenbarren (14) von Laserdioden ausgehende Laserstrahlung (10) zur Kollimation über senkrecht zur aktiven abstrahlenden Schicht angeordnete zylindrische Mikrolinsen (16) geleitet wird, daß für alle auf einer Ebene nebeneinander aufgereihten Laserdiodenbarren (14) je eine gemeinsame in Barrenform und einstückig oder segmentiert ausgeführte zylindrische Mikrolinse (16) vorgesehen ist, und daß dabei die Länge in y-Richtung der zylindrischen Mikrolinsen (16) der Gesamtlängenausdehnung in y-Richtung der Laserdiodenbarren (14) auf dieser Ebene entspricht, daß den zylindrischen Mikrolinsen (16) ein oder mehrere parallel nebeneinander in Segmenten angeordnete und in Richtung zur Fügestelle (3) der zu plattierenden Metallplatten (1, 2) keilförmig zusammenlaufende Prismen (17) nachgeordnet sind, daß dabei Eintrittsdurchmesser (19), Austrittsdurchmesser (20) und die Länge (21) des Prismas (17) derart ausgebildet sind, daß für die durchtretende Laserstrahlung (10) immer Totalreflexion in dem Prisma (17) gegeben ist, und daß die Wärme die Metallplatten (1, 2) derart durchdringt, daß die Laserstrahlung (10) mittels des rechteckförmigen Strahlquerschnitts (22) nur örtlich begrenzte Zonen geringer räumlicher Tiefe an den beiden jeweils zu plattierenden Oberflächen (8, 9) der Metallplatten (1, 2) in den plastischen Zustand versetzt.

2. Vorrichtung nach Anspruch 1, **dadurch gekennzeichnet**, daß zwischen dem Prisma (17) und der Fügestelle (3) sich zur Bildung des rechteckförmigen Strahlquerschnitts (22) für die Laserstrahlung (10) eine in Barrenform ausgeführte Zylinderlinse (18) mindestens über die gesamte Längen- bzw. Höhenausdehnung in y- bzw. z-Richtung der nebeneinander angeordneten (14) Laserdiodenbarren bzw. Stapel erstreckt.

3. Vorrichtung nach Anspruch 1, **dadurch gekennzeichnet**, daß sich zur Bildung des rechteckförmigen Strahlquerschnitts (22) für die Laserstrahlung (10) die zur Fügestelle (3) gerichtete Austrittsfläche des keilförmig zusammenlaufenden Prismas (17) als halbzylindrische Endfläche (24) ausgeführt ist.

4. Vorrichtung zum Plattieren von zwei oder mehreren Metallplatten oder -bändern durch Absorption von Laserstrahlungsenergie, die über strahlformende optische Mittel verfügt, wobei die Laserstrahlung zu einem Strahl mit rechteckförmigem Strahlquerschnitt umgeformt wird, der senkrecht zur Fügelinie gerichtet ist, und die zu plattierenden Metallplatten direkt an der Fügestelle unter dem Druck zweier Walzen zusammengedrückt werden, **dadurch gekennzeichnet**, daß als Strahlquelle Laserdioden verwendet werden, daß die Laserstrahlung (10) stets aus mehreren auf einer Ebene nebeneinander zu Laserdiodenbarren (14) aufgereihten Laserdioden gebildet wird, daß die Laserdiodenbarren (14) sowohl in Längsrichtung (y-Richtung) zu durch den Anwendungsfall definierter Längenausdehnung angeordnet, als auch übereinander in z-Richtung zu Stapeln gelegt sind, und damit eine Gesamtlaserdiodenanordnung (25) gebildet wird, daß die von der Gesamtlaserdiodenanordnung (25) ausgehende Laserstrahlung (10) direkt einer Glasplatte (26) mit rechteckigem Querschnitt zugeführt wird, daß die vier Längsseiten (27, 28, 29, 30) in x-Richtung der Glasplatte (26) derart verspiegelt sind, daß in der Glasplatte (26) zwischen der Eintritts- (31) und Austrittsöffnung (32) für die durchtretende Laserstrahlung (10) eine Totalreflexion stattfindet, daß die Wärme die Metallplatten (1, 2) derart durchdringt, daß die Laserstrahlung (10) mittels des rechteckförmigen Strahlquerschnitts (22) nur örtlich begrenzte Zonen geringer räumlicher Tiefe an den beiden jeweils zu plattierenden Oberflächen (8, 9) der Metallplatten (1, 2) in den plastischen Zustand versetzt.

5. Vorrichtung nach Anspruch 4, **dadurch gekennzeichnet**, daß sich zur Bildung des rechteckförmigen Strahlquerschnitts (22) der Laserstrahlung (10) eine in Barrenform ausgeführte Zylinderlinse (18) mindestens über die gesamte Längen- bzw. Höhenausdehnung in y- bzw. z-Richtung der nebeneinander angeordneten Laserdiodenbarren (14) bzw. Stapel erstreckt.

6. Vorrichtung nach einem oder mehreren der Ansprüche 4 bis 5, **dadurch gekennzeichnet**, daß sich zur Bildung des rechteckförmigen Strahlquerschnitts (22) der Laserstrahlung (10) die zur Fügestelle (3) gerichtete Austrittsfläche (31) der Glasplatte (26) als halbzylindrische Endfläche ausgeführt ist und daß wahlweise zusätzlich die Eintrittsfläche (32) der Glasplatte (26) gekrümmt geformt sein kann, wobei die Austritts- und Eintrittsflächen sich mindestens über die gesamte Längen- und Höhenausdehnung in y- bzw. z-Richtung der nebeneinander angeordneten Laserdiodenbarren (14) bzw. Stapel erstrecken.

7. Vorrichtung nach einem oder mehreren der Ansprüche 4 bis 6, **dadurch gekennzeichnet**, daß mehrere Glasplatten (26) mit rechteckigem Querschnitt, die einer entsprechenden Anzahl von Gesamtlaserdiodenanordnungen (25) zugeordnet sind, übereinander gestapelt werden, und daß diese Glasplatten einer gemeinsamen in Barrenform ausgeführten Zylinderlinse (18) zur Bildung eines einzigen gemeinsamen rechteckförmigen Strahlquerschnitts (22) für die Laserstrahlung (10) zugeführt werden.

8. Vorrichtung nach einem oder mehreren der Ansprüche 4 bis 7, **dadurch gekennzeichnet**, daß zwischen die Gesamtlaserdiodenanordnungen (25) und den Glasplatten mit rechteckigem Querschnitt (26, 33, 34) zur zusätzlichen Kollimation senkrecht zur aktiven abstrahlenden Schicht angeordnete zylindrische Mikrolinsen (16) geschaltet sind, daß für alle auf einer Ebene nebeneinander aufgereihten Laserdiodenbarren (14) eine gemeinsame in Barrenform ausgeführte zylindrische Mikrolinse (16) vorgesehen ist, und daß dabei die Längen in y-Richtung der zylindrischen Mikrolinsen (16) der Gesamtausdehnung der Laserdiodenbarren (14) auf dieser x-y-Ebene entsprechen.

9. Vorrichtung nach einem oder mehreren der Ansprüche 4 bis 8, **dadurch gekennzeichnet**, daß an den Seiten der Glasplatten mit rechteckigem Querschnitt (26, 33, 34) Ultraschallgeber zur Ablenkung der Laserdiodenstrahlung (10) angeordnet sind.

10. Vorrichtung zum Plattieren von zwei oder mehreren Metallplatten oder -bändern durch Absorption von Laserstrahlungsenergie, die über strahlformende optische Mittel verfügt, wobei die Laserstrahlung zu einem Strahl mit rechteckförmigen Strahlquerschnitt umgeformt wird, der senkrecht zur Fügelinie gerichtet ist, und die zu plattierenden Metallplatten direkt an der Fügestelle unter dem Druck zweier Walzen zusammengedrückt werden, **dadurch gekennzeichnet**, daß als Strahlquelle Laserdioden verwendet werden, daß die Laserstrahlung (10) stets aus mehreren auf eine Ebene nebeneinander zu Laserdiodenbarren (14) aufgereihten Laserdioden gebildet wird, daß die Laserdiodenbarren (14) sowohl in Längsrichtung (y-Richtung) zu durch den Anwendungsfall definierter Längenausdehnung angeordnet, als auch übereinander in z-Richtung zu Stapeln gelegt sind, und damit eine Gesamtlaserdiodenanordnung (25) gebildet wird, daß die auf jeder x-y-Ebene mit Laserdiodenbarren (14) von Laserdioden ausgehende Laserstrahlung (10) zur Kollimation über senkrecht zur aktiven abstrahlenden Schicht angeordnete zylindrische Mikrolinsen (16) geleitet wird, daß für alle auf einer Ebene nebeneinander aufgereihte Laserdiodenbarren (14) eine gemeinsame in Barrenform ausgeführte zylindrische Mikrolinse (16) vorgesehen ist, und daß dabei die Länge in y-Richtung der zylindrischen Mikrolinsen (16) der Gesamtlängenausdehnung in y-Richtung der Laserdiodenbarren (14) auf dieser Ebene entspricht, daß sich zur Bildung des rechteckförmigen Querschnitts (22) für die Laserstrahlung (10) eine in Barrenform ausgeführte Zylinderlinse (18) mindestens über die gesamte Längen- bzw. Höhenausdehnung in y- bzw. z-Richtung der nebeneinander angeordneten Laserdiodenbarren (14) bzw. Stapel erstreckt, daß die Wärme die Metallplatten (1, 2) derart durchdringt, daß die Laserstrahlung (10) mittels des rechteckförmigen Strahlquerschnitts (22) nur örtlich begrenzte Zonen geringer räumlicher Tiefe an den beiden jeweils zu plattierenden Oberflächen (8, 9) der Metallplatten (1, 2) in den plastischen Zustand versetzt, und daß sich zwischen der Gesamtlaserdiodenanordnung (25) und dem rechteckförmigen Strahlquerschnitt (22) auf beiden Schmalseiten der Längenausdehnung in x-Richtung der Gesamtlaserdiodenanordnung jeweils eine die Laserstrahlung (10) reflektierende Begrenzungsvorrichtung (35) erstreckt.

11. Vorrichtung nach Patentanspruch 10, **dadurch gekennzeichnet**, daß die reflektierende Begrenzungsvorrichtung (35) als Spiegel ausgebildet ist.

12. Vorrichtung nach einem oder mehreren der Ansprüche 1 bis 11, **dadurch gekennzeichnet**, daß die Leistungsdichteverteilung der Laserstrahlung (10) im Bereich außerhalb des Fokus veränderbar ist.

13. Vorrichtung nach einem oder mehreren der Ansprüche 1 bis 12, **dadurch gekennzeichnet**, daß die Änderung der Leistungsdichteverteilung der Laserstrahlung (10) durch unterschiedliche Montage der zylindrischen Mikrolinsen (16) im Bezug auf die aktive abstrahlende Schicht der Laserdioden erfolgt.

14. Vorrichtung nach einem oder mehreren der Ansprüche 1 bis 12, **dadurch gekennzeichnet**, daß die Änderung der Leistungsdichteverteilung der Laserstrahlung (10) durch eine nicht gleichmäßige Verteilung der Laserdioden über die Höhe in z-Richtung der Stapel der Gesamtlaserdiodenanordnung (25) erfolgt.

15. Vorrichtung zum Plattieren von zwei oder mehreren Metallplatten oder -bändern durch Absorption von Laserstrahlungsenergie, die über strahlformende optische Mittel verfügt, wobei die Laserstrahlung zu einem Strahl mit rechteckförmigem Strahlquerschnitt umgeformt wird, der senkrecht zur Fügelinie gerichtet ist, und die zu plattierenden Metallplatten direkt an der Fügestelle unter dem Druck zweier Walzen zusammengedrückt werden, **dadurch gekennzeichnet**, daß als Strahlquelle Laserdioden verwendet werden, daß die Laserstrahlung (10) stets aus mehreren auf einer Ebene nebeneinander zu Laserdiodenbarren (14) aufgereihten Laserdioden gebildet wird, daß die Laserdiodenbarren (14) sowohl in Längsrichtung (y-Richtung) zu durch den Anwendungsfall definierter Längenausdehnung in y-Richtung angeordnet, als auch übereinander in z-Richtung zu Stapeln gelegt sind, und damit eine Gesamtlaserdiodenordnung gebildet wird, daß die von der Gesamtlaserdiodenanordnung (25) ausgehende Laserstrahlung (10) direkt einem ersten Lichtleiterfaserbündel (42) zugeführt wird, daß das erste Lichtleiterfaserbündel (42) als lineares Faserbündel mit parallel nebeneinander liegenden Lichtleitern ausgebildet ist, daß die Lichtleiter des ersten Lichtleiterfaserbündels (42) an ihrem den zu plattierenden Metallplatten zugewandten Ende (43) kurz vor dem Austritt zu der Zylinderlinse (18) hin starr miteinander verbunden sind und daß am Ende (43) des ersten Lichtleiterfaserbündels (42) Mittel zur Erzeugung von hochfrequenten mechanischen Schwingungen des Endes (43) vorgesehen sind und daß die Wärme die Metallplatten (1, 2) derart durchdringt, daß die Laserstrahlung (10) mit rechteckförmigen Strahlquerschnitt (22) nur örtlich begrenzte Zonen geringer räumlicher Tiefe an den beiden jeweils zu plattierenden Oberflächen (8, 9) der Metallplatten (1, 2) in den plastischen Zustand versetzt.

16. Vorrichtung nach Anspruch 15, **dadurch gekennzeichnet**, daß die hochfrequenten mechanischen Schwingungen des Endes (43) des ersten Lichtleiterfaserbündels (42) aus Oszillationen in z-Richtung senkrecht zur x-Richtung der Laserstrahlung (10) und gleichzeitig in der durch das erste Lichtleiterfaserbündel (42) aufgespannten x-y-Ebene bestehen.

17. Vorrichtung nach einem oder mehreren der Ansprüche 15 bis 16, **dadurch gekennzeichnet**, daß Piezokristalle als Mittel zur Erzeugung der hochfrequenten mechanischen Schwingungen des Endes (43) des ersten Lichtleiterfaserbündels (42) dienen.

18. Vorrichtung nach einem oder mehreren der Ansprüche 15 bis 16, **dadurch gekennzeichnet**, daß elektromagnetische Mittel die hochfrequenten mechanischen Schwingungen des Endes (43) des ersten Lichtleiterfaserbündels (42) erzeugen.

19. Vorrichtung nach einem oder mehreren der Ansprüche 15 bis 18, **dadurch gekennzeichnet**, daß die Auslenkung der mechanischen Schwingungen des Endes auf (43) des ersten Lichtleiterfaserbündels (42) derart gestaltet ist, daß die Abbildung der Laserstrahlung einer Lichtleiterfaser an der Fügestelle (3) bzw. der Fügelinie (4) durch Oszillation den Bereich von mindestens einer benachbarten Abbildung einer anderen Lichtleiterfaser überstreicht.

20. Vorrichtung nach einem oder mehreren der Ansprüche 1 bis 14, **dadurch gekennzeichnet**, daß zwischen der Gesamtlaserdiodenanordnung (25) oder der Mikrolinse (16) einerseits und dem keilförmig zusammenlaufenden Prisma (17) oder der Glasplatte mit rechteckigem Querschnitt (26, 33, 34) oder der Anordnung von reflektierenden Begrenzungsvorrichtungen (35) andererseits ein zweites Lichtleiterfaserbündel (44) zum Transport der Laserstrahlung der Gesamtlaserdiodenanordnung (25) vorgesehen ist.

21. Vorrichtung nach einem oder mehreren der Ansprüche 1 bis 20, **dadurch gekennzeichnet**, daß eine Änderung der Leistungsdichteverteilung der Laserstrahlung (10) mit rechteckförmigen Strahlquerschnitt bzw. der durch diese Laserstrahlung bewirkten Temperaturverteilung an der Fügestelle (3) bzw. der Fügelinie (4) durch Steuerung der Laserdiodenausgangsleistung der Gesamtlaserdiodenanordnung (25) erfolgt und daß der Plattierungsprozeß durch Meßvorrichtungen überwacht wird.

22. Vorrichtung nach einem oder mehreren der Ansprüche 1 bis 5, 7 bis 21, **dadurch gekennzeichnet**, daß an der Fügestelle (3) des Spaltes reflektierte Laserstrahlung zur Messung der Ist-Temperatur mittels einer Zylinderlinse (18) ausgekoppelt wird und daß die Wärmestrahlung einer Detektorzeile (37) zur Erzeugung eines temperaturproportionalen Signals zugeführt wird.

23. Vorrichtung nach einem oder mehreren der Ansprüche 1 bis 5, 7 bis 22, **dadurch gekennzeichnet**, daß zwischen der Zylinderlinse (18) und der Detektorzeile (37) ein Filter (39) für das reflektierte Laserdiodenlicht angeordnet ist.

24. Vorrichtung nach einem oder mehreren der Ansprüche 1 bis 21, **dadurch gekennzeichnet**, daß ein in den Strahlengang der Laserstrahlung (10) mit rechteckförmigen Strahlquerschnitt angeordneter teildurchlässiger Spiegel (45) einen Bruchteil (46) der von der Gesamtlaserdiodenanordnung der Fügestelle (3) bzw. der Fügelinie (4) zugeleiteten Laserstrahlung (10) und/oder ein Bruchteil (47) der von der Fügestelle (3) bzw. der Fügelinie (4) reflektierten Laserstrahlung zu den Detektorreihen (48) und (49) hin auskoppelt.

25. Vorrichtung nach einem oder mehreren der Ansprüche 1 bis 5, 7 bis 24, **dadurch gekennzeichnet**, daß das Signal der Detektorzeile (37) bzw. Dektektorreihen (48, 49) zum Vergleich mit der Solltemperatur einem Regelkreis (38) zur Änderung der Leistung der Gesamtlaserdiodenanordnung (25) und/oder der Änderung der Vorschubgeschwindigkeit (23) der Metallplatten (1, 2) zur Steuerung der vorgegebenen Plattierungstemperatur im zulässigen Bereich zugeführt wird.

26. Vorrichtung nach einem oder mehreren der Ansprüche 1 bis 5, 7 bis 25, **dadurch gekennzeichnet**, daß die Länge in y-Richtung der Detektorzeile (37) bzw. Detektorreihen (48, 49) und der Zylinderlinse (18) der Längenausdehnung in y-Richtung der Fügelinie (4) entspricht.

27. Vorrichtung nach einem oder mehreren der Ansprüche 1 bis 26, **dadurch gekennzeichnet**, daß die Auskopplung der Bruchteile (46, 47) der Laserstrahlung (10) zum Messen aus deren Strahlengang bei der Laserstrahlung der Gesamtlaserdiodenanordnung (25) und bei der von der Fügestelle (3) bzw. Fügelinie (4) reflektierten Laser- oder Wärmestrahlung mittels optischer Mittel (18, 45) zur Detektorzeile (37) bzw. den Detektorreihen (48, 49) jeweils unmittelbar in Strahlungsrichtung nach der Gesamtlaserdiodenanordnung (25) und in Emmisionsrichtung der von der Fügestelle reflektierten Strahlung gesehen nach der Zylinderlinse (18) erfolgt.

28. Vorrichtung nach einem oder mehreren der Ansprüche 1 bis 27, **dadurch gekennzeichnet**, daß die zu plattierenden Metallplatten (1, 2) an den beiden jeweils zu plattierenden Oberflächen (8, 9) vor dem Einlauf in die Fügestelle (3) durch bandförmig gestaltete Induktionsheizungen (40) vorgewärmt werden.

29. Vorrichtung nach einem oder mehreren der Ansprüche 1 bis 28, **dadurch gekennzeichnet**, daß die Fügestelle (3) mit Schutzgas umspült wird und daß dazu das Plattieren in einer Schutzgaskammer (41) erfolgt.

30. Verfahren zum Plattieren von zwei oder mehreren Metallplatten oder -bändern durch Absorbieren von Laserstrahlungsenergie, wobei die Laserstrahlung durch strahlformende optische Mittel in einen Strahl mit rechteckförmigem Querschnitt umgewandelt wird, der senkrecht zur Fügelinie ausgerichtet ist und die zu plattierenden Metallplatten in der Erwärmungszone direkt an der Fügelinie durch zwei Walzen einer Walzvorrichtung zusammengedrückt werden, **dadurch gekennzeichnet**, daß die mit Laserdioden erzeugte Laserstrahlung (10) über den rechteckförmigen Strahlquerschnitt Mittel zur Homogenisierung der Leistungsdichteverteilung durchläuft und daß mit der solcher Art behandelten Laserstrahlung (10) nur örtlich begrenzte Zonen geringer räumlicher Tiefe an den beiden jeweils zu plattierenden Oberflächen (8, 9) der Metallplatten (1, 2) in den plastischen Zustand erwärmt werden.

31. Verfahren nach Anspruch 30, **dadurch gekennzeichnet**, daß den Plattierungsprozeß Meßvorrichtungen für die Leistungsdichteverteilung der Laserstrahlung (10) bzw. der durch diese Laserstrahlung bewirkten Temperaturverteilung an der Fügelinie (4) überwachen.

32. Verfahren nach den Ansprüchen 30 und 31, **dadurch gekennzeichnet**, daß ein Regeln der Plattierungstemperatur im zulässigen plastischen Bereich der Oberflächen (8, 9) der Metallplatten (1, 2) mit den ermittelten Meßwerten durch Ändern der Ausgangsleistung der Gesamtlaserdiodenanordnung (25) und/oder der Änderung der Vorschubgeschwindigkeit (23) der Metallplatten geschieht.

33. Verfahren nach einem oder mehreren der Ansprüche 30 bis 32, **dadurch gekennzeichnet**, daß die jeweils zu plattierenden Oberflächen (8, 9) der Metallplatten (1, 2) vor dem Einlaufen in die Fügelinie (4) vorgewärmt werden und dazu mit Schutzgas umspült werden.

## Claims

1. A device for cladding two or more metal plates or strips by absorption of laser radiation energy, which is provided by beam-forming optical means, wherein the laser radiation is shaped into a beam with a rectangular beam cross-section, which is directed perpendicular to the joint line, and the metal plates to be clad are pressed together directly at the joint location under the pressure of two rolls, characterized in that laser diodes are used as beam sources, in that the laser radiation (10) is always formed from a plurality of laser diodes lined up in a plane alongside one another in laser diode bars (14), in that the laser diode bars (14) are both arranged in the longitudinal direction (y-direction) to a length determined by the application and also positioned one above the other in the z-direction in stacks, so that a complete laser diode assembly (25) is formed, in that the laser radiation (10) emanating from laser diodes in each x-y plane with laser diode bars (14) is passed for collimation through cylindrical micro-lenses (16) arranged perpendicular to the active radiating layer, in that a common cylindrical micro-lens (16) formed in one piece or segmented is provided for all laser diode bars (14) lined up in one plane alongside each other, and in that the length in the y-direction of the cylindrical micro-lenses (16) corresponds to the total length in the y-direction of the laser diode bars (14) in this plane, in that one or more wedge-shaped prisms (17) tapering in the direction towards the joint location (3) of the metal plates (1, 2) to be clad and arranged in one or more segments parallel alongside one another are arranged following the cylindrical micro-lenses (16), in that the entry size (19), exit size (20) and length (21) of the prism (17) are so designed that total internal reflection in the prism (17) always occurs for the laser radiation (10) passing through, and in that the heat so penetrates the metal plates (1, 2) that, by virtue of the rectangular beam cross-section (22), the laser radiation (10) only renders the metal plates (1, 2) in the plastic state locally in limited zones of small spatial depth in the two surfaces (8, 9) of the metal plates (1, 2) to be clad.

2. A device according to claim 1, characterized in that in between the prism (17) and the joint location (3) a cylindrical lens (18) of bar form extends at least over the whole length and height in the y-direction and z-direction respectively of the laser diode bars (14) arranged alongside each other and of the stack respectively to form the rectangular beam cross-section (22) for the laser radiation (10).

3. A device according to claim 1, characterized in that the exit surface of the wedge-shaped, tapering prism (17) directed towards the joint location (3) is formed as a semi-cylindrical end surface (24) to form the rectangular beam cross-section (22) for the laser radiation (10).

4. A device for cladding two or more metal plates or strips by absorption of laser radiation energy, which is provided by beam-forming optical means, wherein the laser radiation is shaped into a beam with a rectangular beam cross-section, which is directed perpendicular to the joint line, and the metal plates to be clad are pressed together directly at the joint location under the pressure of two rolls, characterized in that laser diodes are used as beam sources, in that the laser radiation (10) is always formed from a plurality of laser diodes lined up in a plane alongside one another in laser diode bars (14), in that the laser diode bars (14) are both arranged in the longitudinal direction (y-direction) to a length determined by the application and also positioned one above the other in the z-direction in stacks, so that a complete laser diode assembly (25) is formed, in that the laser radiation (10) emanating from the complete laser diode assembly (25) is passed directly into a glass plate (26) with rectangular cross-section, in that the four long sides (27, 28, 29, 30) in the x-direction of the glass plate (26) are so silvered that total internal reflection takes place in the glass plate (26) between the entry opening (31) and exit opening (32) for the laser radiation (10) passing through, in that the heat so penetrates the metal plates (1, 2) that, by virtue of the rectangular beam cross-section (22), the laser radiation (10) only renders the metal plates (1, 2) in the plastic state locally in limited zones of small spatial depth in the two surfaces (8, 9) of the metal plates (1, 2) to be clad.

5. A device according to claim 4, characterized in that a cylindrical lens (18) of bar form extends at least over the whole length and height in the y-direction and z-direction of the laser diode bars (14) arranged alongside each other and of the stack in order to form the rectangular beam cross-section (22) of the laser radiation (10).

6. A device according to one or more of claims 4 and 5, characterized in that the exit surface (31) of the glass plate (26) directed towards the joint location (3) is formed as a semi-cylindrical end surface to form the rectangular beam cross-section (22) of the laser radiation (10) and in that the entry surface (32) of the glass plate can optionally also be of curved form, wherein the exit and entry surfaces extend at least over the whole length and height in the y-direction and z-direction respectively of the laser diode bars (14) arranged alongside one another and of the stack respectively.

7. A device according to one or more of claims 4 to 6, characterized in that a plurality of glass plates (26) with rectangular cross-section, which are associated with a corresponding number of complete laser diode assemblies (25), are stacked one above the other, and in that these glass plates are led to a common cylindrical lens (18) of bar form to form a single, common rectangular beam cross-section (22) for the laser radiation (10).

8. A device according to one or more of claims 4 to 6, characterized in that cylindrical micro-lenses (16) arranged perpendicular to the active radiating layer are introduced between the complete laser diode assemblies (25) and the glass plates with rectangular cross-section (26, 33, 34) for additional collimation, in that a common micro-lens (16) of bar form is provided for all laser diode bars (14) arrayed alongside each other in one plane, and in that the lengths in the y-direction of the cylindrical micro-lenses (16) correspond to the total extent of the laser diode bars (14) on this x-y plane.

9. A device according to one or more of claims 4 to 8, characterized in that ultrasonic generators are arranged at the sides of the glass plates with rectangular cross-section (26, 33, 34) for deflecting the laser diode radiation (10).

10. A device for cladding two or more metal plates or strips by absorption of laser radiation energy, which is provided by beam-forming optical means, wherein the laser radiation is shaped into a beam with a rectangular beam cross-section, which is directed perpendicular to the joint line, and the metal plates to be clad are pressed together directly at the joint location under the pressure of two rolls, characterized in that laser diodes are used as beam sources, in that the laser radiation (10) is always formed from a plurality of laser diodes lined up in a plane alongside one another in laser diode bars (14), in that the laser diode bars (14) are both arranged in the longitudinal direction (y-direction) to a length determined by the application and also positioned one above the other in the z-direction in stacks, so that a complete laser diode assembly (25) is formed, in that the laser radiation (10) emanating from laser diodes in each x-y plane with laser diode bars (14) is passed for collimation through cylindrical micro-lenses (16) arranged perpendicular to the active radiating layer, in that a common cylindrical micro-lens (16) is provided for all laser diode bars (14) lined up in one plane alongside each other, and in that the length in the y-direction of the cylindrical micro-lenses (16) corresponds to the total length in the y-direction of the laser diode bars (14) in this plane, in that a cylindrical lens (18) of bar form extends at least over the whole length and height in the y-direction and z-direction respectively of the laser diode bars (14) arranged alongside each other and of the stack respectively to form the rectangular cross-section (22) for the laser radiation (10), in that the heat so penetrates the metal plates (1, 2) that, by virtue of the rectangular beam cross-section (22), the laser radiation (10) only renders the metal plates (1, 2) in the plastic state locally in limited zones of small spatial depth in the two surfaces (8, 9) of the metal plates (1, 2) to be clad and in that a limiting device (35) reflecting the laser radiation (10) extends on both narrow sides of the length in the x-direction of the complete laser diode assembly between the complete laser diode assembly and the rectangular beam cross-section (22).

11. A device according to claim 10, characterized in that the reflecting limiting device (35) is in the form of a mirror.

12. A device according to one or more of claims 1 to 11, characterized in that the power density distribution of the laser radiation (10) can be varied in the region outside the focus.

13. A device according to one or more of claims 1 to 12, characterized in that the variation in the power density distribution of the laser radiation (10) is effected by different mounting of the cylindrical micro-lenses (16) relative to the active radiating layer of the laser diodes.

14. A device according to one or more of claims 1 to 12, characterized in that the variation of the power density distribution of the laser radiation (10) is effected by a non-uniform distribution of the laser diodes over the height in the z-direction of the stack of the complete laser diode assembly (25).

15. A device for cladding two or more metal plates or strips by absorption of laser radiation energy, which is provided by beam-forming optical means, wherein the laser radiation is shaped into a beam with a rectangular beam cross-section, which is directed perpendicular to the joint line, and the metal plates to be clad are pressed together directly at the joint location under the pressure of two rolls, characterized in that laser diodes are used as beam sources, in that the laser radiation (10) is always formed from a plurality of laser diodes lined up in a plane alongside one another in laser diode bars (14), in that the laser diode bars (14) are both arranged in the longitudinal direction (y-direction) to a length in the y-direction determined by the application and also positioned one above the other in the z-direction in stacks, so that a complete laser diode assembly (25) is formed, in that the laser radiation (10) emanating from the complete laser diode assembly (25) is passed directly to a first light guide fibre bundle (42), in that the first light guide fibre bundle (42) is in the form of a linear fibre bundle with light guides lying parallel to one another, in that the light guides of the first light guide fibre bundle (42) are rigidly connected together at the bundle end (43) facing the metal plates to be clad, shortly before the exit to the cylindrical lens (18), and in that means for generating high frequency mechanical vibrations of the end (43) are provided at the end (43) of the first light guide fibre bundle (42), and in that the heat so penetrates the metal plates (1, 2) that the laser radiation (10) with rectangular beam cross-section (22) only renders the metal plates (1, 2) in the plastic state locally in limited zones of small spatial depth in the two surfaces (8, 9) of the metal plates (1,2) to be clad.

16. A device according to claim 15, characterized in that the high frequency mechanical vibrations of the end (43) of the first light guide fibre bundle (42) consist of oscillations in the z-direction perpendicular to the x-direction of the laser radiation (10) and simultaneously in the x-y plane spanned by the first light guide fibre bundle (42).

17. A device according to one or more of claims 15 and 16, characterized in that the piezo-crystals serve as means for generating the high frequency mechanical vibrations of the end (43) of the first light guide fibre bundle (42).

18. A device according to one or more of claims 15 and 16, characterized in that electromagnetic means generate the high frequency mechanical vibrations of the end (43) of the first light guide fibre bundle (42).

19. A device according to one or more of claims 15 to 18, characterized in that the deflection of the mechanical vibrations of the end (43) of the first light guide fibre bundle (42) is so arranged that the image of the laser radiation of one light guide fibre at the joint location (3) or the joint line (4) extends through oscillation over the range of at least one adjacent image of another light guide fibre.

20. A device according to one or more of claims 1 to 14, characterized in that a second light guide fibre bundle (44) is provided between the complete laser diode assembly (25) or the micro-lens (16) on the one hand and the wedge-shaped, tapering prism (17) or the glass plate with rectangular cross-section (26, 33, 34) or the arrangement of reflecting limiting devices (35) on the other hand to carry the laser radiation of the complete laser diode assembly (25).

21. A device according to one or more of claims 1 to 20, characterized in that a change of the power density distribution or the laser radiation (10) with rectangular beam cross-section or of the temperature distribution created thereby at the joint location (3) or the joint line (4) is effected by controlling the laser diode output power of the complete laser diode assembly (25) and in that the cladding process is monitored by measuring devices.

22. A device according to one or more of claims 1 to 5, 7 to 21, characterized in that laser radiation reflected at the joint location (3) of the gap reflected laser radiation is coupled out by means of a cylindrical lens (18) for measuring the actual temperature and in that the heat radiation is passed to a detector row (37) for generating a signal proportional to temperature.

23. A device according to one or more of claims 1 to 5, 7 to 22, characterized in that a filter (39) for the reflected laser diode light is arranged between the cylindrical lens (18) and the detector row (37).

24. A device according to one or more of claims 1 to 21, characterized in that a partially transmitting mirror (45) arranged in the beam path of the laser radiation (10) with rectangular cross-section couples out to the detector rows (48) and (49) a fraction (46) of the laser radiation (10) fed from the complete laser diode assembly to the joint location (3) or the joint line (4) and/or a fraction (47) of the laser radiation reflected from the joint location (3) or the joint line (4).

25. A device according to one or more of claims 1 to 5, 7 to 24, characterized in that the signal of the detector row (37) or detector rows (48, 49) is fed for comparison with the set-point temperature to a control circuit (38) for varying the power of the complete laser diode assembly (25) and/or varying the feed speed (23) of the metal plates (1, 2), to control the predetermined cladding temperature within the permissible range.

26. A device according to one or more of claims 1 to 5, 7 to 25, characterized in that the length in the y-direction of the detector row (37) or detector rows (48, 49) and of the cylindrical lens (18) corresponds to the length in the y-direction of the joint line (4).

27. A device according to one or more of claims 1 to 26, characterized in that the coupling out of the fractions (46, 47) of the laser radiation (10) for the measuring is effected from its beam path for the laser radiation of the complete laser diode assembly (25) and for the laser or heat radiation reflected from the joint location (3) or joint line (4) by means of optical means (18 45) to the detector row (37) or the detector rows (48, 49) in each case directly in the radiation direction following the complete laser diode assembly (25) and in the direction of emission of the radiation reflected from the joint location as seen after the cylindrical lens (18).

28. A device according to one or more of claims 1 to 27, characterized in that the metal plates (1, 2) to be clad are preheated at the two surfaces (8, 9) to be clad, before entry into the joint location (3), through strip-form induction heaters (40).

29. A device according to one or more of claims 1 to 28, characterized in that the joint location (3) is bathed in a protective gas and in that the cladding takes place for this in a protective gas chamber (41).

30. A method of cladding two or more metal plates or strips by absorption of laser radiation energy, wherein the laser radiation is transformed into a beam with rectangular cross-section by beam-forming optical means, the beam being directed perpendicular to the joint line and the metal plates to be clad are pressed together directly at the joint line by two rolls of a rolling device, characterized in that the laser radiation (10) generated by the laser diodes passes through the rectangular cross-section to means for homogenising the power density distribution and in that the two surfaces (8, 9) of the metal plates (1, 2) to be clad are heated to the plastic state by the laser radiation (10) treated in such a way only in locally restricted zones of small spatial depth.

31. A method according to claim 30, characterized in that measuring devices for the power density distribution of the laser radiation (10) or the temperature distribution created by this laser radiation monitor the cladding process at the joint line (4).

32. A method according to claims 30 and 31, characterized in that regulation of the cladding temperature in the permissible plastic range of the surfaces (8, 9) of the metal plates (1, 2) is effected with the detected measurement values by varying the output power of the complete laser diode assembly (25) and/or varying the feed speed (23) of the metal plates.

33. A method according to one or more of claims 30 to 32, characterized in that the surfaces (8, 9) of the metal plates (1, 2) to be clad are each preheated before entering the joint line (4) and also are bathed with protective gas.

## Revendications

1. Dispositif de plaquage de deux plaques ou bandes métalliques, ou plus, par absorption d'énergie de rayonnement laser, équipé de moyens optiques formateurs de rayons, le rayonnement laser étant reformé pour produire un rayon à section transversale de rayonnement de forme rectangulaire, dirigé perpendiculairement par rapport à la ligne de jointoiement et les plaques métalliques devant être plaquées étant comprimées directement à l'emplacement de jointoiement, sous la pression exercée par deux cylindres,
caractérisé en ce qu'
on utilise comme source de rayonnement des diodes laser, en ce que le rayonnement laser (10) est toujours constitué à partir d'une pluralité de diodes laser agencées en rangée, les unes à côté des autres, sur un plan, pour former des barres de diodes laser (14), en ce que les barres de diodes laser (14) sont disposées tant dans la direction longitudinale (direction y), pour donner une dimension longitudinale définie par le cas d'application, qu'également les unes au-dessus des autres dans la direction z pour former des piles, et ainsi étant constitué un dispositif global à diodes laser (25), en ce que le rayonnement laser (10), partant des diodes laser dans chaque plan x-y équipé des barres de diodes laser (14), est dirigé pour produire une collimation à travers des micro-lentilles (16) cylindriques disposées perpendiculairement par rapport à la couche active émettrice du rayonnement, en ce que, pour toutes les barres de diodes laser (14) alignées les unes à côté des autres sur un plan, est chaque fois prévue une micro-lentille (16) cylindrique réalisée sous forme de barres et d'une seule pièce ou segmentée, et en ce qu'alors la longueur dans la direction y des microlentilles (16) cylindriques correspond à la dimension globale longitudinale dans la direction y des barres de diodes laser (14) sur ce plan, en ce que, en aval des micro-lentilles cylindriques (16), sont disposés un ou plusieurs prismes (17) disposés parallèlement les uns à côté des autres en formant des segments et coïncidant en forme de coin dans la direction de l'emplacement de jointoiement (3) des plaques métalliques (1, 2) à plaquer, en ce qu'alors le diamètre d'entrée (19), le diamètre de sortie (20) et la longueur (21) du prisme (17) sont tels que, pour le rayonnement laser (10) traversant, on obtienne toujours une réflexion totale dans le prisme (17), et en ce que la chaleur traverse les plaques métalliques (1, 2), de manière que le rayonnement laser (10), au moyen de la section transversale de rayonnement (22) rectangulaire, ne porte à l'état plastique que dans des zones délimitées localement, de faible profondeur spatiale, sur chacune des deux surfaces (8, 9) à plaquer des plaques métalliques (1, 2).

2. Dispositif selon la revendication 1,
caractérisé en ce qu'
une lentille cylindrique (18) réalisée en forme de barre s'étend entre le prisme (17) et l'emplacement de jointoiement (3), pour former la section transversale de rayonnement (22) à forme rectangulaire pour le rayonnement laser (10), au moins sur la totalité de la longueur ou de la hauteur dans la direction y ou z des barres ou piles de diodes laser (14) disposées les unes à côté des autres.

3. Dispositif selon la revendication 1,
caractérisé en ce que
la surface de sortie tournée vers l'emplacement de jointoiement (3) du prisme (17) coïncidant en forme de coin est réalisée sous la forme de surface d'extrémité (24) semi-cylindrique, pour former la section transversale de rayonnement (22) à forme rectangulaire pour le rayonnement laser (10).

4. Dispositif de plaquage de deux plaques ou bandes métalliques, ou plus, par absorption d'énergie de rayonnement laser, équipé de moyens optiques formateurs de rayon, le rayonnement laser étant reformé pour produire un rayon à section transversale de rayonnement à forme rectangulaire qui est dirigé perpendiculairement par rapport à la ligne de jointoiement et les plaques métalliques à plaquer étant comprimées directement à l'emplacement du joint par la pression exercée par deux cylindres,
caractérisé en ce qu'
• on utilise comme source de rayonnement des diodes laser,
• le rayonnement laser (10) est toujours constitué de plusieurs diodes laser alignées les unes à côté des autres sur un plan pour former des barres de diodes laser (14),
• les barres de diodes laser (14) sont disposées tant dans la direction longitudinale (direction y) par rapport à la longueur définie par le cas d'application, qu'également les unes au-dessus des autres dans la direction z pour constituer des piles et ainsi étant constitué un dispositif global à diodes laser (25),
• le rayonnement laser (10) partant du dispositif global à diodes laser (25) est amené directement à une plaque de verre (26) dans la section transversale rectangulaire, en ce que les quatre côtés longitudinaux (27, 28, 29, 30) dans la direction x de la plaque de verre (26) sont rendus réfléchissants, de manière qu'une réflexion totale ait lieu dans la plaque de verre (26), entre l'ouverture d'entrée (31) et l'ouverture de sortie (32), pour le rayonnement laser (30) traversant,
• la chaleur traverse les plaques métalliques (1, 2),
• le rayonnement laser (10) porte à l'état plastique au moyen de la section transversale de rayonnement (22) à forme rectangulaire seulement des zones délimitées localement, de faible profondeur spatiale, sur chacune des deux surfaces (8, 9) à plaquer des plaques métalliques (1, 2).

5. Dispositif selon la revendication 4,
caractérisé en ce que
pour constituer la section transversale de rayonnement rectangulaire (22) du rayonnement laser (10), une lentille cylindrique (18) réalisée sous la forme d'une barre s'étend au moins sur la totalité de la longueur ou de la hauteur dans la direction y, respectivement x, des barres (14) ou piles de diodes laser disposées les unes à côté des autres.

6. Dispositif selon l'une ou plusieurs des revendications 4 à 5,
caractérisé en ce que
• pour former la section transversale de rayonnement (22) à forme rectangulaire du rayonnement laser (10), la surface de sortie (31), tournée vers l'emplacement de jointoiement (3), de la plaque de verre (26) est réalisée sous la forme d'une face d'extrémité semi-cylindrique,
• en plus, par choix, la surface d'entrée (32) de la plaque de verre (26) peut avoir une forme incurvée, les surfaces de sortie et d'entrée s'étendant au moins sur toute la longueur et la hauteur dans la direction y et z des barres (14) ou piles de diodes laser disposées les unes à côté des autres.

7. Dispositif selon l'une ou plusieurs des revendications 4 à 6,
caractérisé en ce que
• plusieurs plaques de verre (26) ayant une section transversale rectangulaire, associées à un nombre correspondant de dispositifs globaux à diodes laser (25), sont empilées les unes au-dessus des autres,
• ces plaques de verre sont amenées à une lentille cylindrique (18) réalisée globalement sous forme de barre, pour former une section transversale de rayonnement (22) rectangulaire commune pour le rayonnement laser (10).

8. Dispositif selon l'une ou plusieurs des revendications 4 à 7,
caractérisé en ce que
• des micro-lentilles (16) cylindriques disposées perpendiculairement par rapport à la couche rayonnante active sont installées entre les dispositifs globaux à diodes laser (25) et les plaques de verre à section transversale rectangulaire (26, 33, 34), pour obtenir une collimation supplémentaire,
• pour toutes les barres de diodes laser (14) alignées sur un plan les unes à côté des autres est prévue une microlentille (16) cylindrique commune réalisée, sous forme de barre, et en ce qu'alors les longueurs en direction y des micro-lentilles (16) cylindriques correspondent à la dimension globale des barres de diodes laser (14) sur ce plan x-y.

9. Dispositif selon l'une ou plusieurs des revendications 4 à 8,
caractérisé en ce que
des émetteurs à ultrasons, destinés pour dévier le rayonnement de diodes laser (10), sont disposés sur les côtés des plaques de verre à section transversale rectangulaire (26, 33, 34).

10. Dispositif de plaquage de deux plaques ou bandes métalliques, ou plus, par absorption d'énergie de rayonnement laser, équipé de moyens optiques formateurs de rayon, le rayonnement laser étant reformé en un rayon à section transversale de rayonnement rectangulaire, dirigé perpendiculairement par rapport à la ligne de jointoiement et les plaques métalliques à plaquer étant comprimées directement à l'emplacement du joint sous la pression exercée par deux cylindres,
caractérisé en ce qu'
• on utilise comme source de rayonnement des diodes laser,
• le rayonnement laser (10) est en permanence formé à partir d'une pluralité de diodes laser alignées les unes à côté des autres sur un plan pour former des barres de diodes laser (14),
• les barres de diodes laser (14) sont disposées tant dans la direction longitudinale (direction y) pour constituer la longueur définie par le cas d'application, qu'également sont placées les unes à côté des autres en piles, dans la direction z, et ainsi étant constitué un dispositif global à diodes laser (25),
• le rayonnement laser (10), partant des diodes laser sur chaque plan x-y équipé de barres de diodes laser (14), est dirigé pour une collimation sur des micro-lentilles (16) cylindriques disposées perpendiculairement par rapport à la couche rayonnante active,
• pour toutes les barres de diodes laser (14) alignées les unes à côté des autres sur un plan, est prévue une micro-lentille (16) cylindrique commune réalisée sous forme de barres,
• la longueur dans la direction y des micro-lentilles cylindriques (16) correspond à la longueur globale dans la direction y des barres de diodes laser (14) sur ce plan,
• pour former la section transversale rectangulaire (22) du rayonnement laser (10), une lentille cylindrique (18) réalisée sous forme de barres s'étend au moins sur toute la longueur ou la hauteur dans la direction y ou z des barres (14) ou piles de diodes laser disposées les unes à côté des autres,
• la chaleur traverse les plaques métalliques (1, 2), de manière que le rayonnement laser (10) porte à l'état plastique au moyen de la section de rayonnement (22) rectangulaire seulement des zones limitées localement, de faible profondeur spatiale, sur chacun des deux surfaces (8, 9) à plaquer des plaques métalliques (1, 2), et en ce qu'entre le dispositif global à diodes laser (25) et la section transversale de rayonnement rectangulaire (22), sur les deux côtés étroits de la longueur dans la direction x du dispositif global à diodes laser s'étend chaque fois un dispositif de limitation (35) qui réfléchit le rayonnement laser (10).

11. Dispositif selon la revendication 10,
caractérisé en ce que
le dispositif de délimitation (35) réfléchissant est réalisé sous la forme de miroir.

12. Dispositif selon l'une ou plusieurs des revendications 1 à 11,
caractérisé en ce que
la distribution de la densité de puissance du rayonnement laser (10) est modifiable dans la zone située hors du foyer.

13. Dispositif selon l'une ou plusieurs des revendications 1 à 12,
caractérisé en ce que
la modification de la distribution de densité de puissance du rayonnement laser (10) s'effectue par un montage réalisé différemment des micro-lentilles cylindriques (16) par rapport à la couche rayonnante active des diodes laser.

14. Dispositif selon l'une ou plusieurs des revendications 1 à 12,
caractérisé en ce que
la modification de la distribution de densité de puissance du rayonnement laser (10) s'effectue au moyen d'une distribution non régulière des diodes laser sur la hauteur en direction z de la pile du dispositif global à diodes laser (25).

15. Dispositif de plaquage de deux plaques ou bandes métalliques, ou plus, par absorption d'énergie de rayonnement laser, équipé de moyens optiques formateurs de rayon, le rayonnement laser étant reformé pour produire un rayon à section transversale de rayonnement rectangulaire qui est dirigé perpendiculairement par rapport à la ligne de jointoiement et les plaques métalliques à plaquer étant comprimées directement à l'emplacement du joint sous la pression exercée par deux cylindres,
caractérisé en ce qu'
• on utilise comme source de rayonnement des diodes laser,
• le rayonnement laser (10) est en permanence constitué à partir d'une pluralité de diodes laser alignées les unes à côté des autres dans un plan pour former des barres de diodes laser (14),
• les barres de diodes laser (14) sont disposées tant dans la direction longitudinale (direction y) pour donner la longueur en direction y qui est définie par le cas d'application, qu'également sont disposées les unes au-dessus des autres en direction z pour former des piles et étant ainsi constitué un agencement global à diodes laser, en ce que le rayonnement laser (10) partant du dispositif global à diodes laser (25) est amené directement à un premier faisceau de fibres conductrices de la lumière (42), en ce que le premier faisceau de fibres conductrices de la lumière (42) est réalisé sous la forme d'un faisceau de fibres linéaires ayant des conducteurs de lumière placés parallèlement les uns à côté des autres,
• les conducteurs de lumière du premier faisceau de fibres conductrices de la lumière (42) sont reliés ensemble rigidement à leur extrémité (43) tournée vers les plaques métalliques à plaquer, peu avant la sortie vers la lentille cylindrique (18), et,
• à l'extrémité (43) du premier faisceau de fibres conductrices de la lumière (42), sont prévus des moyens pour générer des vibrations mécaniques à haute fréquence de l'extrémité (43), et en ce que la chaleur traverse les plaques métalliques (1, 2), faisant que le rayonnement laser (10) à section transversale rectangulaire (22) ne porte à l'état plastique que des zones limitées localement, de faible profondeur spatiale, sur chacune des deux surfaces (8, 9) à plaquer, des plaques métalliques (1, 2).

16. Dispositif selon la revendication 15,
caractérisé en ce que
les vibrations mécaniques à haute fréquence de l'extrémité (43) du premier faisceau de fibres conductrices de la lumière (42) sont constituées d'oscillations en direction z, perpendiculaire à la direction x du rayonnement laser (10) et, simultanément, dans le plan x-y défini par le premier faisceau de fibres conductrices de la lumière (42).

17. Dispositif selon l'une ou plusieurs des revendications 15 à 16,
caractérisé en ce que
des piézo-cristaux sont utilisés comme moyens de génération des vibrations mécaniques à haute fréquence, de l'extrémité (43) du premier faisceau de fibres conductrices de la lumière (42).

18. Dispositif selon l'une ou plusieurs des revendications 15 à 16,
caractérisé en ce que
des moyens électromagnétiques génèrent les vibrations mécaniques à haute fréquence de l'extrémité (43) du premier faisceau de fibres conductrices de la lumière (42).

19. Dispositif selon l'une ou plusieurs des revendications 15 à 18,
caractérisé en ce que
l'amplitude des vibrations mécaniques de l'extrémité (43) du premier faisceau de fibres conductrices de la lumière (42) est telle que l'illustration du rayonnement laser d'une fibre conductrice de la lumière à l'emplacement de jointoiement (3) ou la ligne de jointoiement (4) balaye par oscillation la zone d'au moins une illustration voisine d'une autre fibre conductrice de la lumière.

20. Dispositif selon l'une ou plusieurs des revendications 1 à 14,
caractérisé en ce qu'
entre le dispositif global à diodes laser (25) ou la micro-lentille (16), d'une part, et le prisme (17), coïncidant en forme de coin, ou la plaque de verre à section transversale rectangulaire (26, 33, 34), ou le dispositif de délimitation réfléchissant (35), d'autre part, est prévu un deuxième faisceau de fibres conductrices de la lumière (44) pour assurer le transport du rayonnement laser du dispositif global à diodes laser (25).

21. Dispositif selon l'une ou plusieurs des revendications 1 à 20,
caractérisé en ce qu'
• une modification de la distribution de densité de puissance du rayonnement laser (10) à section transversale de rayonnement rectangulaire ou une distribution, provoquée par ce rayonnement laser, à l'emplacement de jointoiement (3) ou la ligne de jointoiement (4), est effectuée par une commande de la puissance de sortie des diodes laser appartenant au dispositif global à diodes laser (25),
• le processus de plaquage est surveillé par des dispositifs de mesure.

22. Dispositif selon l'une ou plusieurs des revendications 1 à 5, 7 à 21,
caractérisé en ce qu'
• à l'emplacement de jointoiement (3) de l'interstice, le rayonnement laser réfléchi est désaccouplé au moyen d'une lentille cylindrique (18) pour mesurer la température réelle,
• le rayonnement thermique est amené à une ligne de détecteurs (37) pour générer un signal proportionnel à la température.

23. Dispositif selon l'une ou plusieurs des revendications 1 à 5, 7 à 22,
caractérisé en ce qu'
un filtre (39), destiné à la lumière des diodes laser ayant été réfléchie, est disposé entre la lentille cylindrique (18) et la ligne de détecteur (37).

24. Dispositif selon l'une ou plusieurs des revendications 1 à 21,
caractérisé en ce qu'
un miroir (45) partiellement transparent, disposé dans le chemin de rayonnement suivi par le rayonnement laser (10) à section transversale de rayonnement rectangulaire, désaccouple une fraction (46) du rayonnement laser (10) amené par le dispositif global à diodes laser à l'emplacement de jointoiement (3) ou à la ligne de jointoiement (4) et/ou une fraction (47) du rayonnement laser réfléchi par l'emplacement de jointoiement (3) ou la ligne de jointoiement (4), pour l'amener vers les rangées de détecteurs (48) et (49).

25. Dispositif selon l'une ou plusieurs des revendications 1 à 5, 7 à 24,
caractérisé en ce que
le signal de la ligne de détecteurs (37) ou des rangées de détecteurs (48, 49) est amené, pour procéder à une comparaison avec la température de consigne, à un circuit de régulation (38) destiné à modifier la puissance du dispositif global à diodes laser (25) et/ou pour assurer la modification de la vitesse d'avancement (23) des plaques métalliques (1, 2) dans le but de moduler la température de plaquage prédéterminée pour qu'elle se situe dans la plage admissible.

26. Dispositif selon l'une ou plusieurs des revendications 1 à 5, 7 à 25,
caractérisé en ce que
la longueur dans la direction y de la ligne de détecteur (37) ou des rangées de détecteurs (48,49) et de la lentille cylindrique (18) correspond à la longueur en direction y de la ligne de jointoiement (4).

27. Dispositif selon l'une ou plusieurs des revendications 1 à 26,
caractérisé en ce que
le désaccouplement des fractions (46, 47) du rayonnement laser (10) pour obtenir une mesure à partir du chemin de rayonnement lors du rayonnement laser du dispositif global à diodes laser (25) et pour le rayonnement laser ou thermique réfléchi par l'emplacement de jointoiement (3) ou la ligne de jointoiement (4), à l'aide de moyens optiques (18,45) vers la ligne de détecteur (37) ou les rangées de détecteurs (48,49), s'effectue chaque fois directement, dans la direction de rayonnement, après le dispositif global à diodes laser (25) et en observant dans la direction d'émission du rayonnement réfléchi par l'emplacement de jointoiement, après la lentille cylindrique (18).

28. Dispositif selon l'une ou plusieurs des revendications 1 à 27,
caractérisé en ce que
les plaques métalliques (1, 2) à plaquer sont préchauffées sur chacune des deux surfaces (8, 9) à plaquer avant introduction à l'emplacement de jointoiement (3) au moyen d'éléments de chauffage à induction (40) configurés en bandes.

29. Dispositif selon l'une ou plusieurs des revendications 1 à 28,
caractérisé en ce que
l'emplacement de jointoiement (3) soumis à un balayage par du gaz protecteur, et en ce qu'à cette fin le plaquage s'effectue dans une chambre à gaz protecteur (41).

30. Procédé de plaquage de deux plaques ou bandes métalliques ou plus par absorption d'énergie de rayonnement laser, le rayonnement laser étant converti à l'aide de moyens optiques formateurs de rayon, en un rayon à section transversale rectangulaire qui est orienté perpendiculairement par rapport à la ligne de jointoiement et les plaques métalliques à plaquer étant comprimées dans la zone de chauffage directement sur la ligne de jointoiement par deux cylindres appartenant à un dispositif de laminage-roulage,
caractérisé en ce que
• le rayonnement laser (10) généré par les diodes laser passe par les moyens à section transversale rectangulaire pour obtenir une homogénéisation de la distribution de densité de puissance,
• avec un rayonnement laser (10) traité de cette manière, seules des zones limitées de faible profondeur spatiale sont chauffées à l'état plastique sur chacune des deux surfaces (8, 9) à plaquer des plaques métalliques (1, 2).

31. Procédé selon la revendication 30,
caractérisé en ce que
les dispositifs de mesure surveillent le processus de plaquage pour la distribution de densité de puissance du rayonnement laser (10) ou la distribution de température provoquée par ce rayonnement laser sur la ligne de jointoiement (4).

32. Procédé selon les revendications 30 et 31,
caractérisé en ce qu'
une régulation de la température de plaquage, dans les limites d'une plage plastique admissible des surfaces (8, 9) des plaques métalliques (1, 2), s'effectue avec les valeurs de mesure déterminées, par une modification de la puissance de sortie du dispositif global à diodes laser (25) et/ou une modification de la vitesse d'avancement (23) des plaques métalliques.

33. Procédé selon une ou plusieurs des revendications 30 à 32,
caractérisé en ce que
les surfaces (8, 9) chaque fois à plaquer des plaques métalliques (1, 2) sont préchauffées avant introduction dans la ligne de jointoiement (4) et sont de plus environnées par un balayage de gaz protecteur.
